(19) Europäisches Patentamt
European Patent Office
Office européen des brevets

(11) EP 1 629 675 B1

(12) EUROPEAN PATENT SPECIFICATION

(45) Date of publication and mention of the grant of the patent:
**09.01.2008 Bulletin 2008/02**

(21) Application number: **04749684.9**

(22) Date of filing: **01.04.2004**

(51) Int Cl.:
***H04N 7/26*** *(2006.01)* ***H04N 7/30*** *(2006.01)*
***H03M 7/42*** *(2006.01)*

(86) International application number:
**PCT/US2004/010243**

(87) International publication number:
**WO 2004/091221 (21.10.2004 Gazette 2004/43)**

(54) **FIXED BIT RATE, INTRAFRAME COMPRESSION AND DECOMPRESSION OF VIDEO**

INTRAFRAME-KOMPRIMIERUNG UND DEKOMPRIMIERUNG VON VIDEOSIGNALEN MIT FESTER BITRATE

DEBIT BINAIRE FIXE, COMPRESSION ET DECOMPRESSION INTRATRAMES D'UNE IMAGE VIDEO

(84) Designated Contracting States:
**AT BE BG CH CY CZ DE DK EE ES FI FR GB GR HU IE IT LI LU MC NL PL PT RO SE SI SK TR**

(30) Priority: **04.04.2003 US 460517 P**
**04.04.2003 US 460547 P**

(43) Date of publication of application:
**01.03.2006 Bulletin 2006/09**

(60) Divisional application:
**07121939.8**

(73) Proprietor: **AVID TECHNOLOGY, INC.**
**Tewksbury, MA 01876 (US)**

(72) Inventors:
- **KOTTKE, Dane, P.**
  **Windham, NH 03087 (US)**
- **CORNOG, Katherine, H.**
  **Newburyport, MA 01950 (US)**
- **RYNDERMAN, Michel**
  **Brighton, MA 02135 (US)**

(74) Representative: **Garratt, Peter Douglas et al**
**Mathys & Squire**
**120 Holborn**
**London EC1N 2SQ (GB)**

(56) References cited:

| | |
|---|---|
| **EP-A- 0 500 077** | **WO-A-01/11893** |
| **WO-A-97/16029** | **WO-A-98/35500** |
| **US-A- 5 724 097** | **US-A- 5 821 887** |
| **US-B1- 6 249 546** | **US-B1- 6 438 167** |

- **TIHAO CHIANG ET AL: "A NEW RATE CONTROL SCHEME USING QUADRATIC RATE DISTORTION MODEL" IEEE TRANSACTIONS ON CIRCUITS AND SYSTEMS FOR VIDEO TECHNOLOGY, IEEE INC. NEW YORK, US, vol. 7, no. 1, 1 February 1997 (1997-02-01), pages 246-250, XP000678897 ISSN: 1051-8215**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

### BACKGROUND

Computer systems that capture, editing and playback motion video typically process motion video data as digital data, representing a sequence of digital images. Such data typically is stored in computer data files on a random access computer readable medium. An image may represent a single frame, i.e., two fields, or a single field of motion video data. Such systems generally allow any particular image in the sequence of still images to be randomly accessed for editing and for playback.

Since digital data representing motion video may consume large amounts of computer memory, particularly for full motion broadcast quality video (e.g., sixty field per second for NTSC and fifty fields per second for PAL), the digital data typically is compressed to reduce storage requirements. There are severalkinds of compression for motion video information. One kind of compression is called "intraframe" compression, which involves compressing the data representing each image independently of other images. Commonly-used intraframe compression techniques employ a transformation to the frequency domain from the spatial domain, for example, by using discrete cosine transforms, to generate a set of coefficients in the frequency domain that represent the image or portions of the image. These coefficients generally are quantized, placed in a specified order (commonly called a zig-zag ordering), then entropy encoded. Entropy encoding is a lossless process that typically involves generating code words that represent the coefficients, using a form of Huffman coding scheme. Image quality of compressed images is primarily affected by the loss of information through quantizing.

Some compression techniques involve additional operations that further affect image quality. For example, some compression techniques reduce the size of an image before it is transformed and quantized. Some other compression techniques reduce the bit depth, by rounding, for example, from 10-bits to 8-bits.

More compression can obtained for motion video sequences by using what is commonly called "interframe" compression. Interframe compression involves predicting one image using another. This kind of compression often is used in combination with intraframe compression. For example, a first image may be compressed using intraframe compression, and typically is called a key frame. The subsequent images may be compressed by generating predictive information that, when combined with other image data, results in the desired image. Intraframe compressed images may occur every so often throughout the sequence. For interframe compressed image sequences, the interframe compressed images in the sequence can be accessed and decompressed only with reference to other images in the sequence.

Compression techniques for video also may provide a variable bit rate per image or a fixed bit rate per image. Either type of technique generally uses a desired bit rate in a control loop to adjust parameters of the compression algorithm, typically parameters for quantization, so that the desired bit rate is met. For fixed bit rate compression, the desired bit rate must be met by each compressed image or by the compressed data for each subset of each image. For variable bit rate compression, the desired bit rate is generally the average bit rate (in terms of bits per image) that is sought.

Compressed image data generally is stored in a format that permits efficient access to each part of the compressed image data and the parameters for decompressing each part of the compressed image data. There are several standards that have been defined for bitstream formats for different kinds of compressed data. For example, there is a bitstream format defined by the MPEG-2 standard. Typically, such a bitstream format includes picture header information and picture information. The header information typically includes information about how to access the compressed image data and associated parameters for each block of an image. Such bitstream formats generally are designed to enable efficient access to the bitstream as a single serial stream of data. MPEG-2 defines "slices" of compressed data by placing "slice markers" in the data stream; however a slice can only be accessed by scanning the data stream for the slice markers.

WO 98/35500 discloses a method of optimizing quantizer values in an image encoder. The method employs a quantizer controller which selects optimum values for the quantization parameters for a limited total number of bits available for encoding an image frame.

EP 0500077 discloses a motion image data compression coding apparatus in which quantization step size is dynamically controlled by comparing an actual code amount to a target code amount.

US 5724097 relates to a method of selecting a quantization step size based on patterns detected in the video signal.

### SUMMARY

In accordance with the appended claims high quality fixed bit rate, intraframe-only compression of video can be achieved using rate distortion optimization. The compression process involves transforming portions of the image to generate frequency domain coefficients for each portion. A quantization matrix is selected according to a desired bit rate, from a plurality of quantization matrices each defined for a respective one of a plurality of bit rates. A bit rate for each transformed portion using a plurality of scale factors is determined. Distortion for each portion is estimated according to the plurality of scale factors. A scale factor is selected for each portion to minimize the total distortion in the image while achieving a desired bit rate. The frequency domain coefficients for each portion are quantized using the selected quantization matrix as scaled by the selected scale factor for the portion. The quantized frequency domain coefficients are encoded using a variable length encoding to provide compressed data for each of the defined portions. The compressed data is output for each of the defined portions to provide a compressed bitstream at the desired bit rate.

Rate-distortion optimization may be performed by obtaining a bit rate for each of a plurality of scale factors, each of which is a power of two. The selected scale factor also may be limited to a scale factor that is a power of two. Portions of the rate-distortion curve that extend beyond the data available also may be estimated. In particular, for any portion of an image and a quantization matrix, there is a scale factor, called the maximum scale factor. Such a scale factor causes all of the quantizers to be such that all of the coefficients are quantized to zero. The maximum scale factor provides the minimum bit rate. Bit rates corresponding to scale factors between the maximum scale factor and another scale factor for which a computed bit rate is available can be estimated by interpolation.

A weighting factor may be used to scale the values in the selected quantization matrix for the bit depth of the image data. Thus, the numerical accuracy of subsequent operations can be controlled for data of multiple bit depths, such as both 8-bit and 10-bit data.

Entropy encoding of the AC coefficients may be performed in the following manner. The range of potential amplitudes for quantized coefficients is split into two parts. The first part is a base range for amplitudes between 1 and a convenient value $A_B$. The second part is an index range for the remaining amplitudes [$A_B$ + 1, ... $A_{max}$] where $A_B$ is the maximum, quantized coefficient amplitude. Amplitudes in the base range are encoded with a Huffman code word that represents that amplitude. The index range is further divided into a number of segments, each having a range of values corresponding to $A_B$. Amplitudes in the index range are encoded with a Huffman code word that represents the amplitude and an index value that indicates the segment from which they originate. If there is one or more preceding zero valued coefficients, the amplitude is encoded by a Huffman code word, and, if the amplitude is in the index range, followed by an index value, followed by another Huffman code word representing the length of the preceding run of zeros. This encoding may be applicable to forms of data other than quantized coefficient data.

It also is desireable to provide a bitstream format for compressed data that would allow multiple processors to access and decompress different parts of the data in parallel without spending time scanning through all of the compressed image data. Compressed images are usually defined by macroblocks that have a width less than the image width and a height less than the image height. Thus, an image is divided several bands of multiple lines, and each band of multiple lines is divided into a macroblock. The set of macroblocks that define a band is called herein a macroblock rasterscan.

The bit stream format includes, for each image, a picture header followed by image scan data. The bitstream also may include a picture footer or trailer. The image scan data includes data corresponding to a plurality of macroblock rasterscans. The data for each macroblock rasterscan includes data for a plurality of macroblocks for a band of lines in the image followed by padding. The padding ensures that data for each macroblock rasterscan terminates on a data boundary. This data boundary depends on the amount of data that permits efficient access by a processor, for example, but not limited to 4096 (4K) bytes.

The picture header references an image scan index that indicates a number of macroblock rasterscans in the image scan data and a number of lines per macroblock rasterscan, followed by entries of the index. Each entry in the index includes an offset of the macroblock rasterscan in image scan. The picture header may include a reference to a picture header type, that references an I_frame_image_descriptor, which references the image scan index.

Using the image scan index, each macroblock rasterscan can be randomly and directly accessed, thus allowing different macroblock rasterscans to be processed in parallel by different processors. Thus, multiple processors operating in parallel can efficiently decode an image.

BRIEF DESCRIPTION OF THE DRAWINGS

Fig. 1 is a data flow diagram of an example encoder for compression of a sequence of images.
Fig. 2 is a data flow diagram of an example decoder for decompression of a sequence of images.
Fig. 3 is a table representing how coefficient values may be entropy encoded.
Fig. 4 is a diagram of an example format of code words for entropy encoding.
Fig. 5 is a diagram of an example lookup table for converting a coefficient to a code word.
Fig. 6 is a diagram of an example lookup table for converting a run length value to a code word.
Fig. 7 is a diagram of an example lookup table for converting a code word to a coefficient value.
Fig. 8 is a diagram of an example lookup table for converting a code word to a run length value.
Fig. 9 is a dataflow diagram of an example image processing system that uses an encoder and decoder such as in Figs. 1 and 2.
Fig. 10 is a block diagram of an example encoder with rate control.
Fig. 11 is a diagram of an example data structure for compressed image data.
Fig. 12 is a diagram of an example data structure of image scan data in Fig. 11.
Fig. 13 is a diagram of an example data structure of raster scan data in Fig. 12.
Fig. 14 is a table describing an example data structure for picture header information.
Fig. 15 is a table describing an example data structure for an image descriptor in Fig. 14.
Fig. 16 is a table describing an example data structure for an image scan index in Fig. 15.
Fig. 17 is a dataflow diagram of an example image processing system using a bitstream format.
Fig. 18 is a flowchart describing how a bitstream may be read.
Fig. 19 is a flowchart describing how a bitstream may be written.

DETAILED DESCRIPTION

Fig. 1 illustrates a system for compressing image data. Image data 100 is transformed (by transform 102) to produce coefficients 104 for different frequencies. This frequency domain representation of an image may be produced in many ways. For example, the image may be subdivided into blocks of picture elements (pixels). Each block is transformed from its color representation in the spatial domain to a color representation in a frequency domain, typically using a discrete cosine transform (DCT). The result of the transform is a matrix of frequency coefficients, one coefficient for each frequency. A set of such blocks is called a macroblock.

The coefficients are then quantized (by quantizer 106) using a set of quantizers, one quantizer for each frequency, to provide a quantized coefficient 108 for each frequency. The set of quantizers typically is referred to as a quantization table or quantization matrix. The quantization matrices appropriate for a particular bit rate, for example 220 Mbits per frame and 140 Mbits per frame, can be defined experimentally using sample images and a procedure defined in: "RD-OPT: An Efficient Algorithm for Optimizing DCT Quantization Tables," by Viresh Ratnakar and Miron Livny, in 1995 Data Compression Conference, pp. 332-341 ("Ratnakar"). Ratnakar teaches how to optimize a quantization table for a single image; however, this procedure may be extended to optimize a quantization table using statistics for multiple example images selected as "typical" images. Such a quantization table can be developed for each of a set of different desired output bit rates.

The quantization table quantizes the frequency data by dividing each coefficient by its corresponding quantizer and rounding. For example, the following formula may be used:

round[S(u,v)/Q(u,v)];

where S(u,v) is the value at position u,v in the matrix of frequency coefficients, Q(u,v) is the quantizer at position u,v in the quantization matrix.

The values Q(u,v) in the quantization matrix may be a function of a fixed quantization matrix, a scale factor and a weighting factor. The weighting factor scales the values in the quantization matrix so that they are appropriate for the bit depth of the image data, so that the variability in dynamic ranges is accounted for data of multiple bit depths, such as both 8-bit and 10-bit data.

The quantization also may be performed to provide a variable width "deadzone". The deadzone is the area around zero that is quantized to zero. In the equation above, using rounding, the deadzone has a width of the quantizer value Q(u,v). Noise can be reduced by increasing the deadzone as a function of quantizer value, for example, using the following equations:

The quantized coefficient, c, is defined as:

$$c = \begin{cases} 0 & |x| < (1-k) * Q(u,v) \\ \operatorname{sgn}(x) \left\lfloor \dfrac{|x| + kQ(u,v)}{Q(u,v)} \right\rfloor & |x| \geq (1-k) * Q(u,v) \end{cases}$$

The dequantized value, $\hat{x}$, would be:

$$\hat{x} = \begin{cases} 0 & c = 0 \\ \text{sgn}(c)(|c| - k + \delta)Q(u,v) & c \neq 0 \end{cases}$$

where δ is typically one-half.

Then the width of the deadzone equals *2(1-k)Q(u, v)*

With these equations, if *k*=0.5 and δ=0.5, the quantization / dequantization are conventional with a deadzone of width *Q(u,v).* For non-zero k the deadzone can be made variable. If k is in the interval (0, 0.5) the deadzone is smaller, if k is in the interval (-1, 0.5) the deadzone is larger. To reduce noise a value of *k*∈(-0.5,0.25) might be used to produce a deadzone between 1.5*Q(u,v)* and 3.0*Q(u,v)*.

The scale factor may be controlled by a rate controller 114, described in more detail below. In one embodiment, a set of scale factors that are powers of two, e.g., 1, 2, 4, 8, 16..., may be used.

An entropy encoder 110 encodes the quantized values using entropy encoding to produce code words that are formatted to provide the compressed data 112. Prior to entropy encoding a pre-defined coefficient ordering process is applied to the matrix of quantized coefficients to provide a one-dimensional sequence of coefficients. A set of patterns, called symbols, is identified from the sequence of coefficients. The symbols, in turn, are mapped to code words. The symbols may be defined, for example, using a form of run length encoding. Huffman encoding is generally employed to encode the sequence of symbols to variable length codes. The compressed data 112 includes the entropy encoded data and any other data for each block, macroblock or image that may be used to decode it, such as scale factors. A form of entropy encoding is described in more detail below in connection with Figs. 3-8.

Compression parameters can be changed to affect both the bit rate and the image quality of decompressed data. In DCT-based image compression, compression parameters that may be changed include the quantizers, either within an image between portions of an image, or from one image to the next. Typically, a portion of an image is a set of DCT blocks called a macroblock. A change to the quantizers affects the compressed bit rate and the image quality upon decompression. An increase in a quantizer value typically decreases the bit rate but also reduces the image quality. Conversely, a decrease in a quantizer value typically increases the bit rate but also improves the image quality. Quantizers may be adapted individually, or the set of quantizers may be scaled uniformly by a scale factor. In one embodiment, the scale factor is adjusted for each macroblock to ensure that each frame has an amount of data that matches a desired fixed bit rate.

A rate controller 114 generally receives the bit rate 122 of the compressed data produced by compressing an image, any constraints 116 on the compression (such as buffer size, bit rate, etc.), and a distortion metric 120. The bit rate and distortion is determined for each macroblock for a number of scale factors in a statistics gathering pass on the image. The rate controller then determines, for each macroblock, an appropriate scale factor 118 to apply to the quantization matrix. The rate controller 114 seeks to minimize the distortion metric 120 over the image according to the constraints 116 by using a technique that is called "rate-distortion optimization," such as described in "Rate-distortion optimized mode selection for very low bit rate video coding and the emerging H.263 standard," by T. Wiegand, M. Lightstone, D. Mukherjee, T.G. Campbell, and S.K. Mitra, in IEEE Trans. Circuits Syst. Video Tech., Vol. 6, No. 2, pp. 182-190, April 1996, and in "Optimal bit allocation under multiple rate constraints," by Antonio Ortega, in Proc. of the Data Compression Conference (DCC 1996), April 1996. In particular, the total distortion over all macroblocks in the image is optimized over the image to meet a desired bit rate and thus select a scale factor for each macroblock.

There are several ways to compute a distortion metric. For example, but not limited to this example, the distortion metric 120 (d) may estimated by the square of the scale factor (q), i.e., $d = q^2$. Thus, the distortion metric is known for each scale factor without analyzing the compressed image data.

The bit rate and distortion metric corresponding to a scale factor for which quantization is not performed may be estimated by interpolating measured rate and distortion values obtained from other scale factors. Such a technique is described in "Bit-rate control using piecewise approximated rate-distortion characteristics," by L-J. Lin and A. Ortega, in IEEE Trans. Circuits Syst. Video Tech., Vol. 8, No. 4, pp. 446-459, August 1998, and in "Cubic Spline Approximation of Rate and Distortion Functions for MPEG Video," by L-J. Lin, A. Ortega and C.-C. Jay Kuo, in Proceedings of IST/SPIE, Digital Video Compression: Algorithms and Technologies 1996, vol. 2668, pp. 169-180, and in "Video Bit-Rate Control with Spline Approximated Rate-Distortion Characteristics," by Liang-Jin Lin, PhD Thesis, University of Southern California, 1997. For example, bit rates may be computed for two scale factors, one small and one large such as 2 and 128. Interpolation between these two points may be used to obtain a suitable scale factor with a corresponding desired bit rate. If the resulting compressed image data exceeds the desired bit rate, the image data can be compressed again using a different scale factor.

Portions of the rate-distortion curve that extend beyond the data available also may be estimated. In particular, for any portion of an image and a quantization matrix, there is a scale factor, called the maximum scale factor. Such a scale factor causes all of the quantizers to be such that all of the coefficients are quantized to zero. The maximum scale factor provides the minimum bit rate. Bit rates corresponding to scale factors between the maximum scale factor and a scale factor for which an actual bit rate is available can be estimated by interpolation, such as linear interpolation.

A more specific example of a rate controller is described in more detail below in connection with Fig. 10.

Referring now to Fig. 2, a system for decompressing or decoding image data will now be described. Compressed image data 200 is received and code words are processed by an entropy decoder 202. The entropy decoder performs the inverse of the entropy encoding performed in Fig. 1. An example entropy decoder is described in more detail below. The entropy decoder 202 produces the quantized coefficient data 204. An inverse quantizer 206 reverses the quantization to produce coefficients 208. An inverse transform 210 is performed on the coefficients 208 to produce the image data 212.

Fig. 9 is data flow diagram of an example image processing system that such an encoder and decoder. The image processing system 900 includes data storage 901 including a computer readable medium that stores the compressed image data. The compressed image data may be stored, for example, in a data file or may be referenced by metadata in a file format such as MXF or AAF. Such compressed image data also may be stored in memory, such as a cache. This compressed image data also may be used for transmission of data in which case 901 represents a transmission medium over which the compressed image data is transmitted as computer readable signals. Data 902 including the compressed image data is read and decompressed by a decoder 903. The decoder corresponds to Fig. 2. Data including the compressed image data, shown at 904, is compressed and written by an encoder 905. The decoder 903 may read one or more images from the compressed image data. The decoder 903 decompresses the read data and provides the decompressed data 906 to an image processing application 907.

The image processing application 907 performs operations on the image data to produce uncompressed image data 908. For example, such image processing operations may include, but are not limited to, operations for combining images, such as compositing, blending, and keying, or operations within an image, such as resizing, filtering, and color correction, or operations between two images, such as motion estimation. The image processing application also may be an application that captures and/or creates digital image data, without using any input image data 906. The image processing application also may manipulate metadata about the image data, for example to define a sequence of scenes of motion video information. The image processing application also may playback image data in one or more formats, without providing any output data 908.

Although Fig. 9 shows only one image processing application, there may be multiple image processing operations that may operate in parallel on the data or may operate as a sequence of operations. There are a variety of ways in which an image processing operation may process image data, and the invention is not limited thereby. As an example, the decoder and/or the image processing application and/or the encoder may be part of a larger application for editing video information. As another example, the encoder and/or image processing application and/or the decoder may "plug-in" to an editing application that permits access to image data in memory through an application programming interface (API). The encoder and decoder may be implemented in hardware that is accessed by an image processing application.

Entropy encoding and decoding will now be described in connection with Figs. 3-8. The DC coefficients may be encoded and decoded in a number of ways, for example, but not limited to a method used in the MPEG-2 standard. The entropy encoding of the AC coefficients uses the range of potential non-zero amplitudes for quantized coefficients and splits this range into two parts: [1,..., $A_B$] and [$A_B$ + 1,..., $A_{\max}$]. The first part is a base range for amplitudes between 1 and a convenient amplitude, for example 64. The second part is an index range for the amplitudes greater than $A_B$ up to an including the maximum amplitude $A_{\max}$, for example 65 to 4096. Amplitudes in the base range are encoded with a Huffman code word that represents that amplitude. The index range is further divided into a number of segments, each having a range of values corresponding to $A_B$. Amplitudes in the index range are encoded with a Huffman code word that represents the amplitude and an index value that indicates the segment from which they originate. If there is one or more preceding zero valued coefficients, the amplitude is encoded by a Huffman code word, and, if the amplitude is in the index range, followed by an index value, followed by another Huffman code word representing the length of the preceding run of zeros. The longest run of zeros is the number of coefficients to be encoded minus one.

Therefore, for the AC coefficients, there are six types of symbol sets: four for amplitude symbols, one for run lengths, and one for end of block, as follows below. In this example, $A_B$ = 64 and $A_{MAX}$ = 4096, but this can be easily generalized to other partitionings of the quantized coefficient amplitude range.

1. $A^{nrb} = \{A_1^{nrb}, A_2^{nrb}, \ldots, A_{64}^{nrb}\}$: Non-zero amplitude coefficients in the base range, with no preceding run of zero valued coefficients. The amplitudes vary from $A_1^{nrb} = 1$ to $A_{64}^{nrb} = 64$.

2. $A^{wrb} = \{A_1^{wrb}, A_2^{wrb}, \ldots, A_{64}^{wrb}\}$: Non-zero amplitude coefficients in the base range, *with* preceding run of zero valued coefficients. The amplitudes vary from $A_1^{wrb} = 1$ to $A_{64}^{wrb} = 64$.

3. $A^{nri} = \{A_1^{nri}, A_2^{nri}, \ldots, A_{64}^{nri}\}$: Non-zero amplitude coefficients in the index range, with *no* preceding run of zero valued coefficients. The amplitudes vary from 65 to 4096.

4. $A^{wri} = \{A_1^{wri}, A_2^{wri}, \ldots, A_{64}^{wri}\}$: Non-zero amplitude coefficients in the index range, with preceding run of zero valued coefficients. The amplitudes vary from 65 to 4096.

5. $R = \{R_1, R_2, \ldots, R_{max}\}$: a run of 1 or more zero valued coefficients. $R_1$ =1 and $R_{max}$ = 62.

*6. E* = {*EOB*} : the end of block symbol.

Fig. 3 shows how a zero run length and amplitude coefficients are mapped to the sets $A^{nrb}$, $A^{nri}$, $A^{wrb}$, $A^{wri}$ and *R.* The map 300 of Fig. 3 indicates that for amplitudes (represented along axis 302), 1 to 64, there are two possible symbol sets $A^{nrb}$ (304), if the preceding run of zeros is zero, and $A^{wrb}$ (306), if the preceding run of zeros is nonzero. For amplitudes 65 to 4096, each range of 64 values, e.g., 308, has a unique index *i*, and two symbol sets $A^{nri}$ (310), if the preceding run of zeros is zero, and $A^{wri}$ (312), if the preceding run of zeros is nonzero. A code word R is provided for each run length, as indicated at 314; however $A^{wrb}$ and $A^{wri}$ are not affected by the actual length of the run of zeros.

If the amplitude of a coefficient maps to one of the index ranges, either $A^{nri}$ 310 or $A^{wri}$ 312, it is encoded by a variable length code word and an index value. The index value, P, is computed from the amplitude *A* by:

$$P = ((A-1) >> 6), \quad 65 \le A \le 4096.$$

The value used to determine the variable length code word, *V,* is computed according to:

$$\hat{A} = A - (P << 6) \quad 1 \le \hat{A} \le 64; \quad V = VLCLUT(\hat{A}).$$

Using these techniques, a set of Huffman code words is generated for the symbols in the five sets of $A^{nrb}$, $A^{nri}$, $A^{wrb}$, $A^{wri}$, *E* which results in a set of amplitude code words $V^A = \{V^{nrb}, V^{nri}, V^{wrb}, V^{wri}, V^E\}$. There are 4 * 64 + 1=129 code words in $V^A$. Another set of Huffman code words is generated for the 62 symbols in *R*, which results in a set of zero-run code words $V^R$. The set of code words and how they map to amplitude values or run length values can be defined using statistics from sample data accordingto Huffman coding principles.

The format of such code words will now be described in connection with Fig. 4. If the amplitude of a coefficient maps to the symbol set $A^{nrb}$ 304, a single code word is inserted into the encoded symbol bitstream. The format for this code word is shown in the top of Fig. 4 at 400, and includes the code word $V^{nrb}$ 402 and a sign bit 404. If the amplitude of a coefficient is in the range of $[1, \ldots, A_B]$ but is preceded by a run of zeros, it maps to the symbol set $A^{wrb}$. In this case, two code words 406 are inserted into the encoded symbol bitstream: one for the code word $V^{wrb}$ 408, with a sign bit 410, and the second for the number representing the preceding run of zeros $V^R$ 412. If a coefficient has no preceding run of zeros and its amplitude is in the range of $[A_B + 1, \ldots, A_{MAX}]$, it maps to symbol set $A^{nri}$ ;a single code word 414 is inserted into the encoded symbol bitstream that includes the code word $V^{nri}$ 416, a sign bit 418 and a 6-bit index value *P* 420. If the amplitude of a coefficient is in the index range of $[A_B + 1, \ldots, A_{MAX}]$ and is preceded by a run of zeros, it maps to symbol set $A^{wri}$. In this case, two code words 422 are inserted into the encoded symbol bitstream. These code words include a code word $V^{wri}$ 424, with sign bit 426 and a 6-bit index *P* 428, to represent the amplitude, and a code word $V^R$ 430 to represent the number representing the preceding run of zeros. Finally, the end of block code word 432 is a single code word, for example a 4-bit symbol, is inserted into the encoded bit-stream at the end of a block.

Such variable length encoding may be performed using two lookup tables, examples of which are shown in Figs. 5 and 6. The format for the amplitude symbols in the set $V^A$ is shown in Fig. 5. The format for the run-length symbols in the set $V^R$ is shown in Fig. 6.

Each entry, e.g., 502, in the amplitude table 500 uses sixteen bits for the code word 504 and five bits that represent the length 506 of the code word. The maximum storage requirement for one entry, e.g., 502, is twenty-one bits. Thus, each entry can be stored in three successive bytes. In some instances, it may be useful to store the value as a 32-bit word. The total number of bytes required for the amplitude encoding table is $129 * 3 \frac{\text{bytes}}{\text{entry}} = 387 \text{ bytes.}$ Given an amplitude, it can be converted to a value between 1 and 64 and an indication of whether it is preceded by a run, and an indication of whether it is in the base range or the index range, and the index value *P*. This information is applied to the lookup table 500 to retrieve the code word $V^{nrb}$, $V^{nri}$, $V^{wrb}$, or $V^{wri}$, which can be combined with a sign bit, index value P, and, if appropriate, the subsequent code word $V^R$ for the run length.

The run-length table 600 has entries, e.g., 602, that require a maximum of 14 bits, including 10 bits for the code word 604 and 4 bits for the length 606 of the code word, which can be stored in two bytes. There are a total of 62 entries, which means that the table requires $62\ \text{entries} * 2\frac{\text{bytes}}{\text{entry}} = 124\ \text{bytes}.$ Given a run length, the code word entry corresponding to that run length is simply retrieved from the table.

An example format for decoding tables is shown in Fig. 7-8. To save memory each decoding table, one for amplitude code words and the other for run length code words, may be divided into two tables. Due to the nature of Huffman codes, each code word can be uniquely located in a bitstream. For each code word, it is applied to the appropriate decoding table.

For run length values, either table 700 or 702 receive as an input 704 a run length code word, and provide as an output the corresponding value. The corresponding value includes a number 706 or 710 representing the length of the run and a length 708 or 712 representing the length in bits of the number 706 or 710.

For amplitude values, either table 800 or 802 receive as an input 804 the amplitude code, and provide as an output the corresponding values including a number 806 or 814 representing the length in bits of the value to be output, a number 808 or 816 representing the amplitude, a run flag 810 or 818 indicating whether a run code will follow, and index flag 812 or 820 indicating whether an index code will follow.

Using these encoding principles, the first code word for AC coefficients of a block is an amplitude code word. The run flag and index flag indicate whether the subsequent code word is another amplitude code word, an index value or a run length code word. If both the run flag and index flag are set, the amplitude code word is followed by an index code word, then a run length code word, which are then followed by another amplitude code word.

An example implementation of a rate controller will now be described in connection with Fig 10. In this implementation, the rate controller performs a statistics collection pass on the image to determine bit rates for each macroblock in the image for each of a number of scale factors. Each scale factor is a power of two. The distortion corresponding to each scale factor for each macroblock is determined by the square of the scale factor. As noted above, the total distortion over all macroblocks in the image is minimized over the image while meeting a desired bit rate. Thus, the rate controller selects a scale factor for each macroblock to minimize the total distortion over the image while meeting a desired bit rate. The selected scale factor for each macroblock then is used to quantize the frequency coefficients of that macroblock.

In particular, in Fig. 10, the coefficients 1000 for each macroblock are weighted using coefficient weighting 1002 by the fixed quantization matrix 1006 and any pre-scale factor 1004. The weighted coefficients 1008 are then quantized by multiple scale factors by quantizers 1010. In a hardware implementation, each quantizer may operate in parallel and may correspond to a scale factor that is a power of two so as to perform only a bit shifting operation. In this example, there are eight such quantizers. As few as two quantizers corresponding to two scale factors could be used, if the rate controller uses interpolation to estimate bit rates corresponding to other scale factors. The resulting quantized values 1012 can be applied to a code length calculator 1014. The code length calculator sums the lengths of the code words that would be generated for the quantized values in each block in each macroblock, to provide a bit rate 1016 for each macroblock for each of the scale factors. The amplitude 1018 of the maximum weighted coefficient, from among the weighted coefficients 1012, also is output. This value 1018 determines the maximum scale factor, which would result in total quantization of the image data. The rate controller 1020 receives the bit rates 1016 for each scale factor for each macroblock in the image, and the maximum weighted macroblock amplitude 1018 for each macroblock in the image, and a desired bit rate 1022 for the image. Using rate distortion optimization over the image, the rate controller 1020 minimizes the total distortion over all macroblocks in the image to meet the desired bit rate by selecting a scale factor 1024 for each macroblock. The scale factor 1024 for each macroblock is then used to quantize the coefficients for the macroblock, which are then entropy encoded.

Such encoding and decoding may be used for, for example, but not limited to, high definition video, in which images have from 720 to 1080 lines and 1280 to 1920 pixels per line. Frame rates generally vary from 23.976 to 60, with higher frame rates typically representing the field rate of an interlaced frame. Each pixel may be represented using a number of components, for example, but not limited to, luminance and chrominance (Y, Cr, Cb) or red, green and blue, with each component represented using a number of bits (called the bit depth). The bit depth typically is 8 or 10 bits, but could be 12 or 16 bits. Such data has a significantly higher bandwidth than standard definition video. By providing the pre-scale factor as described above, the same encoder may be used to encode both 8-bit and 10-bit data. A fixed quantization matrix may be provided for each of a number of different desired bit rates.

Referring now to Fig. 11, an example data structure for compressed image data will now be described. This data structure includes a picture header 10 and image scan data 12. A picture trailer 14 also may be used. The picture header stores information about the image scan data, and an example data structure for it is described in more detail below in connection with Figs. 14-16. The image scan data 12 is a data structure that stores the encoded image data for an image. An example data structure for the image scan data is described in more detail below in connection with Figs. 12-13. The picture trailer data terminates the data structure for an image.

Referring now to Fig. 12 an example data structure for image scan data will now be described. The image scan data is defined by an image scan header 20, which references rasterscan data, as shown by 22, 24, 26 and 28. An image is divided several bands of multiple lines, and each band of multiple lines is divided into a macroblock. The set of macroblocks that define a band is called herein a macroblock rasterscan. The raster scan data, e.g., 22 is a data structure that stores the encoded image data for a macroblock rasterscan. An example data structure for the raster scan data is described in more detail below in connection with Fig. 13.

Referring now to Fig. 13, an example data structure for raster scan data will now be described. The raster scan data is defined by an raster scan header 30, which references encoded data for macroblocks, as shown by 32,34,36 and 38, for a band of lines in the image. The encoded data for the macroblocks is followed by padding 39. The padding ensures that data for each macroblock rasterscan terminates on a data boundary. This data boundary depends on the amount of data that permits efficient access by a processor, for example, but not limited to 4096 (4K) bytes. The encoded data for a macroblock have a data structure that is similar to a macroblock data structure found in the MPEG-2 standard.

Referring now to Fig. 14, an example data structure for picture header information will now be described. The picture header references data that allows access to an image scan index that is an index of the locations of each macroblock rasterscan in the image scan data, and of the locations of the macroblock data in each macroblock rasterscan. An example data structure for the image scan index is described below in connection with Fig. 16. For example, the picture header data structure 40 may include general information 42 about the picture, which may be similar to information provided by a picture header data structure as defined by the MPEG-2 standard. The picture header 40 also may include a reference to a picture header type 44. If the type in this field corresponds to a predetermined value (called "I frame image ID" in Fig. 14), then the following value 46 is a reference to (called an "I_frame_image_descriptor" in Fig. 14) an image descriptor which describes the image and references the image scan index. An example data structure for the I_frame_image_descriptor is shown in Fig. 5.

Referring now to Fig. 15, an example data structure for an image descriptor will now be described. An image descriptor 50 is referenced by the picture header and references the image scan index. It includes general information about the image as indicated at 52. This general information is similar to data structures in the MPEG-2 standard for describing I-frames. The image descriptor may include a start code 54 for an image scan index (called "imagescan_ index_start code" in Fig. 15) that, if present, is followed by a value 56 indicative of the size of the image scan index and a reference 58 to the data structure for the image scan index An example data structure for the image scan index is shown in Fig. 16.

Referring now to Fig. 16, an example data structure for an image scan index will now be described. The image scan index 60 includes a value 62 indicating a number of entries in the index, which corresponds to the number of macroblock rasterscans in the image scan data. A value 64 indicates a number of lines per macroblock rasterscan. This data is followed by entries 66 of the index, the number of which corresponds to the number indicated by value 62. Each entry in the index indicates an offset of the macroblock rasterscan in image scan.

Using the image scan index, each macroblock rasterscan can be randomly and directly accessed, thus allowing different macroblock rasterscans to be processed in parallel by different processors. Thus, multiple processors operating in parallel can efficiently decode an image.

Fig. 17 is data flow diagram of an example image processing system that uses this bitstream format. The image processing system 70 includes data storage 71 that stores the bitstream, for example, in a data file or which may be referenced by metadata in a file format such as MXF or AAF. Such a bitstream also may be stored in memory, such as a cache. This bitstream format also may be used as a format for transmission of data, in which case 71 represents a transmission medium over which the compressed image data is transmitted as computer readable signals. Data 72 including the bitstream is read and decompressed by decoder 73. Data including the bitstream, shown at 74, is written into such a format by an encoder 75. The decoder 73 may read one or more macroblock rasterscans from the bitstream. The decoder 73 decompresses the read data and provides the decompressed data 76 to an image processing application 77.

The image processing application 77 performs operations on the image data to produce uncompressed image data 78. For example, such image processing operations may include, but are not limited to, operations for combining images, such as compositing, blending, and keying, or operations within an image, such as resizing, filtering, and color correction, or operations between two images, such as motion estimation. The image processing application also may be an application that captures and/or creates digital image data, without using any input image data. The image processing application also may manipulate metadata about the image data, for example to define a sequence of scenes of motion video information. The image processing application also may playback image data in one or more formats, without providing any output data.

Although Fig. 17 shows only one image processing application, there may be multiple image processing operations that may operate in parallel on the data or may operate as a sequence of operations. There are a variety of ways in which an image processing operation may process image data, and the invention is not limited thereby. As an example, the decoder and/or the image processing application and/orthe encoder may be part of a larger application for editing video information and may access the image data in the same buffer in memory. As another example, the decoder and/or image processing application and/or the encoder may "plug-in" to an editing application that permits access to image data in memory through an application programming interface (API). The encoder and decoder may be implemented in hardware that is accessed by the image processing application.

Referring now to Fig. 18, an example process for reading such a bitstream for an image, using the example data structures of Figs. 11-16, will now be described. The picture header (Fig. 14) is accessed (80) to locate the i_frame_image_descriptor. The i_frame_image_descriptor (Fig. 15) is accessed (82) to locate the image scan index. The image scan index (Fig. 16) is then accessed (84) to locate, for each macroblock rasterscan, the offset of the macroblock rasterscan (e.g., 24) in the image scan data (12 in Fig. 11). Using the retrieved offsets, each of the macroblock rasterscans may be retrieved (86) from the image scan data and decoded. Because each macroblock rasterscan can be randomly and directly accessed, different macroblock rasterscans can be processed in parallel by different processors.

In one embodiment, if each macroblock rasterscan has an end of block code, indicating the end of the data for the macroblock rasterscan, and if the amount of padding is known, the process of Fig. 18 can be modified to read the data without the index. In this process, the macroblock rasterscan data may be scanned for the end of block code. If the padding is such that it ends on a determinable data boundary (such as a boundary divisible by 4096 bytes), then the end of the macroblock rasterscan is known. Reading can skip directly to the end of the macroblock rasterscan.

Referring now to Fig. 19, an example process for writing such a bitstream for an image, using the example data structures of Figs. 11-16, will now be described. In this example, it is assumed that data is compressed an decoded in order by macroblock rasterscan. That is, each macroblock is encoded in order as they occur along a macroblock rasterscan, and the macroblock rasterscans are encoded in order as they occur in the image. The writing process involves, for each image scan, initializing (90) the data structures for the picture header, image frame descriptor and the image scan index. The number of entries, the number of lines per macroblock rasterscan and the size of the image scan index can be known and set in these data structures before compression of the image begins. As each macroblock is compressed and written into the image scan bitstream, the offset of the first macroblock of the first macroblock rasterscan is stored (92) as an entry in the image scan index. The sizes of the macroblocks are accumulated (94) for all macroblocks in the macroblock rasterscan. After all macroblocks in the macroblock rasterscan have been written, the accumulated size is rounded (96) up to the nearest data boundary (for example, a multiple of 4096 or 4K). The difference between the accumulated size and the rounded size is an amount of padding added (98) to the end of the data for the macroblock rasterscan that is written into the bitstream of the image scan. Steps 92 through 98 are repeated, as indicated at 99, for each macroblock rasterscan in the image. Data for each macroblock rasterscan also may be encoded in parallel.

The various components of the system described herein may be implementedas a computer program using a general-purpose computer system. Such a computer system typically includes a main unit connected to both an output device that displays information to a user and an input device that receives input from a user. The main unit generally includes a processor connected to a memory system via an interconnection mechanism. The input device and output device also are connected to the processor and memory system via the interconnection mechanism.

One or more output devices may be connected to the computer system. Example output devices include, but are not limited to, a cathode ray tube (CRT) display, liquid crystal displays (LCD) and other video output devices, printers, communication devices such as a modem, and storage devices such as disk or tape. One or more input devices may be connected to the computer system. Example input devices include, but are not limited to, a keyboard, keypad, track ball, mouse, pen and tablet, communication device, and data input devices. The invention is not limited to the particular input or output devices used in combination with the computer system or to those described herein.

The computer system may be a general purpose computer system which is programmable using a computer programming language. The computer system may also be specially programmed, special purpose hardware. In a general-purpose computer system, the processor is typically a commercially available processor. The general-purpose computer also typically has an operating system, which controls the execution of other computer programs and provides scheduling, debugging, input/output control, accounting, compilation, storage assignment, data management and memory management, and communication control and related services.

A memory system typically includes a computer readable medium. The medium may be volatile or nonvolatile, writeable or nonwriteable, and/or rewriteable or not rewriteable. A memory system stores data typically in binary form. Such data may define an application program to be executed by the microprocessor, or information stored on the disk to be processed by the application program. The invention is not limited to a particular memory system.

A system such as described herein may be implemented in software or hardware or firmware, or a combination of the three. The various elements of the system, either individually or in combination may be implemented as one or more computer program products in which computer program instructions are stored on a computer readable medium for execution by a computer. Various steps of a process may be performed by a computer executing such computer program instructions. The computer system may be a multiprocessor computer system or may include multiple computers connected over a computer network. The components of the system may be separate modules of a computer program, or may be separate computer programs, which may be operable on separate computers. The data produced by these components may be stored in a memory system or transmitted between computer systems.

## Claims

**1.** A method for fixed bit rate, intraframe compression of video, including a sequence of images, comprising, for each image:

transforming portions of the image (100) to generate frequency domain coefficients (104, 1000) for each portion;
selecting, from a plurality of quantization matrices each defined for a respective one of a plurality of bit rates, a quantization matrix (1006) according to a desired bit rate (1022);
determining a bit rate (1016) for each transformed portion of the image by applying the selected quantization matrix with each of a plurality of scale factors to the transformed portion;
estimating distortion for each portion according to the plurality of scale factors;
selecting a scale factor (1024) for each portion to minimize the total distortion in the image while achieving a desired bit rate;
quantizing the frequency domain coefficients for each portion using the selected quantization matrix as scaled by the selected scale factor for the portion;
entropy encoding the quantized frequency domain coefficients (108) using a variable length encoding to provide compressed data (112) for each of the defined portions; and
outputting the compressed data for each of the defined portions to provide a compressed bitstream at the desired bit rate.

**2.** The method of claim 1, wherein the distortion is estimated according to a square of the scale factor.

**3.** The method of claim 1, wherein quantizing the frequency domain coefficients (1000) further comprises scaling using a weighting factor (1002) selected from among a plurality of weighting factors according to the bit depth of the image data.

**4.** The method of claim 1, wherein each of the plurality of scale factors is a power of two.

**5.** The method of claim 4, wherein the selected scale factor is a power of two.

**6.** The method of claim 1, wherein determining a bit rate comprises:

determining a maximum scale factor that will cause the image data to be completely quantized; and
interpolating to provide an estimated bit rate for one or more scale factors between the maximum scale factor and a largest scale factor for which a bit rate has been determined.

**7.** The method of claim 1, wherein entropy encoding comprises:

for each nonzero value not preceded by a zero value, determining whether the nonzero value is in a base range or an index range;
for each nonzero value not preceded by a zero value and in the base range, encoding the nonzero value using a code word from a first set of code words;
for each nonzero value not preceded by a zero value and in the index range, determining an index and encoding the nonzero value using a code word from a second set of code words, followed by the index;
for each nonzero value preceded by a zero value, determining whether the nonzero value is in a base range or an index range;
for each nonzero value preceded by a zero value and in the base range, encoding the nonzero value using a code word from a third set of code words and encoding the zero value using a code word from a fifth set of code words and after the code word for the nonzero value; and
for each nonzero value preceded by a zero value and in the index range, determining an index and encoding the nonzero value using a code word from a fourth set of code words, followed by the index and encoding the zero value using a code word from the fifth set of code words and after the code word for the nonzero value.

**8.** The method of claim 1, wherein the quantization matrix includes a plurality of quantizers, wherein each quantizer corresponds to a frequency coefficient, and wherein quantizing the frequency coefficients includes quantizing each frequency coefficient using the corresponding quantizer so as to provide a deadzone having a width greater than a value of the quantizer.

**9.** A method for entropy encoding a series of values, comprising:

for each nonzero value not preceded by a zero value, determining whether the nonzero value is in a base range or an index range;
for each nonzero value not preceded by a zero value and in the base range, encoding the nonzero value using a code word from a first set of code words;
for each nonzero value not preceded by a zero value and in the index range, determining an index and encoding the nonzero value using a code word from a second set of code words, followed by the index;
for each nonzero value preceded by a zero value, determining whether the nonzero value is in a base range or an index range;
for each nonzero value preceded by a zero value and in the base range, encoding the nonzero value using a code word from a third set of code words and encoding the zero value using a code word from a fifth set of code words and after the code word for the nonzero value; and
for each nonzero value preceded by a zero value and in the index range, determining an index and encoding the nonzero value using a code word from a fourth set of code words, followed by the index and encoding the zero value using a code word from the fifth set of code words and after the code word for the nonzero value.

**10.** A method for optimization of bit rate and distortion in compression of data, comprising:

determining a bit rate (1016) for each portion of the data being compressed using a plurality of scale factors, including:

determining a maximum scale factor that will cause total distortion to the portion of the data; and
interpolating between the maximum scale factor and largest scale factor for which a bit rate has been determined to estimate a bit rate corresponding to a scale factor between the largest scale factor and the maximum scale factor;
estimating distortion for each portion of the data being compressed according to the plurality of scale factors; and
selecting scale factors (1024) for each portion to minimize the total distortion of the data to achieve a desired bit rate (1022).

## Patentansprüche

**1.** Verfahren für die rahmeninterne Kompression (oder Intrarahmen-Kompression) mit fester Bitrate von eine Folge von Bildern enthaltenden Videosignalen, das für jedes Bild umfasst:

Transformieren von Abschnitten des Bildes (100), um Frequenzbereichskoeffizienten (104, 1000) für jeden Abschnitt zu erzeugen;
Auswählen einer Quantisierungsmatrix (1006) aus mehreren Quantisierungsmatrizen, wovon jede für eine Entsprechende von mehreren Bitraten definiert ist, in Übereinstimmung mit einer Soll-Bitrate (1022);
Bestimmen einer Bitrate (1016) für jeden transformierten Abschnitt des Bildes durch Anwenden der ausgewählten Quantisierungsmatrix mit jedem von mehreren Skalierungsfaktoren auf den transformierten Abschnitt;
Schätzen einer Verzerrung jedes Abschnitts in Übereinstimmung mit den mehreren Skalierungsfaktoren;
Auswählen eines Skalierungsfaktors (1024) für jeden Abschnitt, um die Gesamtverzerrung in dem Bild minimal zu machen, während eine Soll-Bitrate erzielt wird;
Quantisieren der Frequenzbereichskoeffizienten für jeden Abschnitt unter Verwendung der ausgewählten Quantisierungsmatrix mit Skalierung durch den ausgewählten Skalierungsfaktor für den Abschnitt;
Ausführen einer Entropie-Codierung der quantisierten Frequenzbereichskoeffizienten (108) unter Verwendung einer Codierung mit variabler Länge, um für jeden der definierten Abschnitte komprimierte Daten (112) zu schaffen; und

Ausgeben der komprimierten Daten für jeden der definierten Abschnitte, um einen komprimierten Bitstrom mit der Soll-Bitrate zu schaffen.

2. Verfahren nach Anspruch 1, wobei die Verzerrung in Übereinstimmung mit einem Quadrat des Skalierungsfaktors geschätzt wird.

3. Verfahren nach Anspruch 1, wobei die Quantisierung der Frequenzbereichskoeffizienten (1000) ferner das Skalieren unter Verwendung eines Gewichtungsfaktors (1002), der aus mehreren Gewichtungsfaktoren in Übereinstimmung mit der Bittiefe der Bilddaten ausgewählt wird, umfasst.

4. Verfahren nach Anspruch 1, wobei jeder der mehreren Skalierungsfaktor eine Zweierpotenz ist.

5. Verfahren nach Anspruch 4, wobei der ausgewählte Skalierungsfaktor eine Zweierpotenz ist.

6. Verfahren nach Anspruch 1, wobei das Bestimmen der Bitrate umfasst:

Bestimmen eines maximalen Skalierungsfaktors, der bewirkt, dass die Bilddaten vollständig quantisiert werden; und
Interpolieren, um eine geschätzte Bitrate für einen oder mehrere Skalierungsfaktoren zwischen dem maximalen Skalierungsfaktor und einem größten Skalierungsfaktor, für den eine Bitrate bestimmt worden ist, zu schaffen.

7. Verfahren nach Anspruch 1, wobei die Entropie-Codierung umfasst:

für jeden von Null verschiedenen Wert, dem kein Nullwert vorhergeht, Bestimmen, ob der von Null verschiedene Wert in einem Basisbereich oder in einem Indexbereich liegt;
für jeden von Null verschiedenen Wert, dem kein Nullwert vorhergeht und der im Basisbereich liegt, Codieren des von Null verschiedenen Wertes unter Verwendung eines Codewortes aus einer ersten Gruppe von Codewörtern;
für jeden von Null verschiedenen Wert, dem kein Nullwert vorhergeht und der im Indexbereich liegt, Bestimmen eines Indexes und Codieren des von Null verschiedenen Wertes unter Verwendung eines Codewortes aus einer zweiten Gruppe von Codewörtern, dem der Index folgt;
für jeden von Null verschiedenen Wert, dem ein Nullwert vorhergeht, Bestimmen, ob der von Null verschiedene Wert in einem Basisbereich oder einem Indexbereich liegt;
für jeden von Null verschiedenen Wert, dem ein Nullwert vorhergeht und der im Basisbereich liegt, Codieren des von Null verschiedenen Wertes unter Verwendung eines Codewortes aus einer dritten Gruppe von Codewörtern und Codieren des Nullwertes unter Verwendung eines Codewortes aus einer fünften Gruppe von Codewörtern und nach dem Codewort für den von Null verschiedenen Wert; und
für jeden von Null verschiedenen Wert, dem ein Nullwert vorhergeht und der im Indexbereich liegt, Bestimmen eines Indexes und Codieren des von Null verschiedenen Wertes unter Verwendung eines Codewortes aus einer vierten Menge von Codewörtern, dem der Index folgt, und Codieren des Nullwertes unter Verwendung eines Codewortes aus der fünften Gruppe von Codewörtern und nach dem Codewort für den von Null verschiedenen Wert.

8. Verfahren nach Anspruch 1, wobei die Quantisierungsmatrix mehrere Quantisierer enthält, wobei jeder Quantisierer einem Frequenzkoeffizienten entspricht und wobei das Quantisieren der Frequenzkoeffizienten das Quantisieren jedes Frequenzkoeffizienten unter Verwendung des entsprechenden Quantisierers enthält, um so eine Totzone zu schaffen, deren Breite größer als ein Wert des Quantisierers ist.

9. Verfahren zum Entropiecodieren einer Reihe von Werten, das umfasst:

für jeden von Null verschiedenen Wert, dem kein Nullwert vorhergeht, Bestimmen, ob der von Null verschiedene Wert in einem Basisbereich oder einem Indexbereich liegt;
für jeden von Null verschiedenen Wert, dem kein Nullwert vorhergeht und der im Basisbereich liegt, Codieren des von Null verschiedenen Wertes unter Verwendung eines Codewortes aus einer ersten Gruppe von Codewörtern;
für jeden von Null verschiedenen Wert, dem kein Nullwert vorhergeht und der im Indexbereich liegt, Bestimmen eines Indexes und Codieren des von Null verschiedenen Wertes unter Verwendung eines Codewortes aus einer zweiten Gruppe von Codewörtern, dem der Index folgt;

für jeden von Null verschiedenen Wert, dem ein Nullwert vorhergeht, Bestimmen, ob der von Null verschiedene Wert in einem Basisbereich oder einem Indexbereich liegt;
für jeden von Null verschiedenen Wert, dem ein Nullwert vorhergeht und der im Basisbereich liegt, Codieren des von Null verschiedenen Wertes unter Verwendung eines Codewortes aus einer dritten Gruppe von Codewörtern und Codieren des Nullwertes unter Verwendung eines Codewortes aus einer fünften Gruppe von Codewörtern und nach dem Codewort für den von Null verschiedenen Wert; und
für jeden von Null verschiedenen Wert, dem ein Nullwert vorhergeht und der im Indexbereich liegt, Bestimmen eines Indexes und Codieren des von Null verschiedenen Wertes unter Verwendung eines Codewortes aus einer vierten Gruppe von Codewörtern, dem der Index folgt, und Codieren des Nullwertes unter Verwendung eines Codewortes von einer fünften Gruppe von Codewörtern und nach dem Codewort für den von Null verschiedenen Wert.

**10.** Verfahren zum Optimieren der Bitrate und der Verzerrung bei der Kompression von Daten, das umfasst:

Bestimmen einer Bitrate (1016) für jeden Abschnitt der Daten, der komprimiert wird, unter Verwendung mehrerer Skalierungsfaktoren, umfassend:

Bestimmen eines maximalen Skalierungsfaktors, der eine vollständige Verzerrung des Abschnitts der Daten bewirkt; und
Interpolieren zwischen dem maximalen Skalierungsfaktor und dem größten Skalierungsfaktor, für den eine Bitrate bestimmt worden ist, um eine Bitrate zu schätzen, die einem Skalierungsfaktor zwischen dem größten Skalierungsfaktor und dem maximalen Skalierungsfaktor entspricht;
Schätzen einer Verzerrung für jeden Abschnitt der Daten, der komprimiert wird, in Übereinstimmung mit den mehreren Skalierungsfaktoren; und
Auswählen von Skalierungsfaktoren (1024) für jeden Abschnitt, um die gesamte Verzerrung der Daten minimal zu machen, um eine Soll-Bitrate (1022) zu erzielen.

## Revendications

**1.** Procédé pour débit binaire fixe, compression intratrame de vidéo, comprenant une séquence d'images, comprenant, pour chaque image :

la transformation de parties de l'image (100) pour générer des coefficients de domaine fréquentiel (104, 1000) pour chaque partie;
la sélection, à partir d'une pluralité de matrices de quantification, chacune étant définie pour un débit respectif d'une pluralité de débits binaires, d'une matrice de quantification (1006) selon un débit binaire souhaité (1022) ;
la détermination d'un débit binaire (1016) pour chaque partie transformée de l'image en appliquant la matrice de quantification choisie avec chacun d'une pluralité de facteurs d'échelle à la partie transformée ;
l'estimation de la distorsion pour chaque partie selon la pluralité de facteurs d'échelle ; la sélection d'un facteur d'échelle (1024) pour chaque partie afin de réduire au maximum la distorsion totale dans l'image tout en réalisant un débit binaire souhaité;
la quantification des coefficients de domaine fréquentiel pour chaque partie en utilisant la matrice de quantification sélectionnée telle qu'elle est dimensionnée par le facteur d'échelle sélectionné pour la partie ;
le codage par entropie des coefficients de domaine fréquentiel quantifiés (108) en utilisant un codage à longueur variable pour fournir des données comprimées (112) pour chacune des parties définies; et
la production des données comprimées pour chacune des parties définies pour fournir un train de bits comprimé au débit binaire souhaité.

**2.** Procédé selon la revendication 1, dans lequel la distorsion est évaluée selon un carré du facteur d'échelle.

**3.** Procédé selon la revendication 1, dans lequel la quantification des coefficients de domaine fréquentiel (1000) comprend en outre la mise à l'échelle à l'aide d'un facteur de pondération (1002) choisi parmi une pluralité de facteurs de pondération selon la profondeur binaire des données d'image.

**4.** Procédé selon la revendication 1, dans lequel chacun de la pluralité de facteurs d'échelle est une puissance de deux.

**5.** Procédé selon la revendication 4, dans lequel le facteur d'échelle sélectionné est une puissance de deux.

6. Procédé selon la revendication 1, dans lequel la détermination d'un débit binaire comprend :

la détermination d'un facteur d'échelle maximal qui permettra la quantification totale des données d'image; et l'interpolation pour fournir un débit binaire estimé pour un ou plusieurs facteurs d'échelle entre le facteur d'échelle maximal et un facteur d'échelle le plus grand pour lequel un débit binaire a été déterminé.

7. Procédé selon la revendication 1, dans lequel le codage par entropie comprend :

pour chaque valeur différente de zéro non précédée par une valeur zéro, la détermination si la valeur différente de zéro est dans une plage de base ou une plage d'index;
pour chaque valeur différente de zéro non précédée par une valeur zéro et dans la plage de base, le codage de la valeur différente de zéro à l'aide d'un mot de code provenant d'un premier jeu de mots de code ;
pour chaque valeur différente de zéro non précédée par une valeur zéro et dans la plage d'index, la détermination d'un index et le codage de la valeur différente de zéro à l'aide d'un mot de code provenant d'un deuxième jeu de mots de code, suivi par l'index ;
pour chaque valeur différente de zéro précédée par une valeur zéro, la détermination si la valeur différente de zéro est dans une plage de base ou dans une plage d'index ;
pour chaque valeur différente de zéro précédée par une valeur zéro et dans la plage de base, le codage de la valeur différente de zéro à l'aide d'un mot de code provenant d'un troisième jeu de mots de code et le codage de la valeur zéro à l'aide d'un mot de code provenant d'un cinquième jeu de mots de code et après le mot de code pour la valeur différente de zéro ; et
pour chaque valeur différente de zéro précédée par une valeur zéro et dans la plage d'index, la détermination d'un index et le codage de la valeur différente de zéro à l'aide d'un mot de code provenant d'un quatrième jeu de mots de code, suivi de l'index, et le codage de la valeur zéro à l'aide d'un mot de code provenant du cinquième jeu de mots de code et après le mot de code pour la valeur différente de zéro.

8. Procédé selon la revendication 1, dans lequel la matrice de quantification comprend une pluralité de quantificateurs, dans lequel chaque quantificateur correspond à un coefficient de fréquence, et dans lequel la quantification des coefficients de fréquence comprend la quantification de chaque coefficient de fréquence à l'aide du quantificateur correspondant de manière à fournir une zone morte ayant une largeur supérieure à une valeur du quantificateur.

9. Procédé pour coder par entropie une série de valeurs, comprenant :

pour chaque valeur différente de zéro non précédée par une valeur zéro, la détermination si la valeur différente de zéro est dans une plage de base ou une plage d'index;
pour chaque valeur différente de zéro non précédée par une valeur zéro et dans la plage de base, le codage de la valeur différente de zéro à l'aide d'un mot de code provenant d'un premier jeu de mots de code ;
pour chaque valeur différente de zéro non précédée par une valeur zéro et dans la plage d'index, la détermination d'un index et le codage de la valeur différente de zéro à l'aide d'un mot de code provenant d'un deuxième jeu de mots de code, suivi par l'index;
pour chaque valeur différente de zéro précédée par une valeur zéro, la détermination si la valeur différente de zéro est dans une plage de base ou une plage d'index ;
pour chaque valeur différente de zéro précédée par une valeur zéro et dans la plage de base, le codage de la valeur différente de zéro à l'aide d'un mot de code provenant d'un troisième jeu de mots de code et le codage de la valeur zéro à l'aide d'un mot de code provenant d'un cinquième jeu de mots de code et après le mot de code pour la valeur différente de zéro; et
pour chaque valeur différente de zéro précédée par une valeur zéro et dans la plage d'index, la détermination d'un index et le codage de la valeur différente de zéro à l'aide d'un mot de code provenant d'un quatrième jeu de mots de code, suivi par l'index, et le codage de la valeur zéro à l'aide d'un mot de code provenant du cinquième jeu de mots de code et après le mot de code pour la valeur différente de zéro.

10. Procédé pour l'optimisation du débit binaire et de la distorsion dans la compression de données, comprenant :

la détermination d'un débit binaire (1016) pour chaque partie des données étant comprimée à l'aide d'une pluralité de facteurs d'échelle, comprenant :

la détermination d'un facteur d'échelle maximal qui causera une distorsion totale à la partie des données ; et l'interpolation entre le facteur d'échelle maximal et le plus grand facteur d'échelle pour lequel un débit binaire a été déterminé afin d'évaluer un débit binaire correspondant à un facteur d'échelle entre le plus grand facteur d'échelle et le facteur d'échelle maximal ;
l'évaluation de la distorsion pour chaque partie des données qui est comprimée selon la pluralité de facteurs d'échelle ; et
la sélection de facteurs d'échelle (1024) pour chaque partie afin de minimiser la distorsion totale des données afin d'obtenir un débit binaire souhaité (1022).

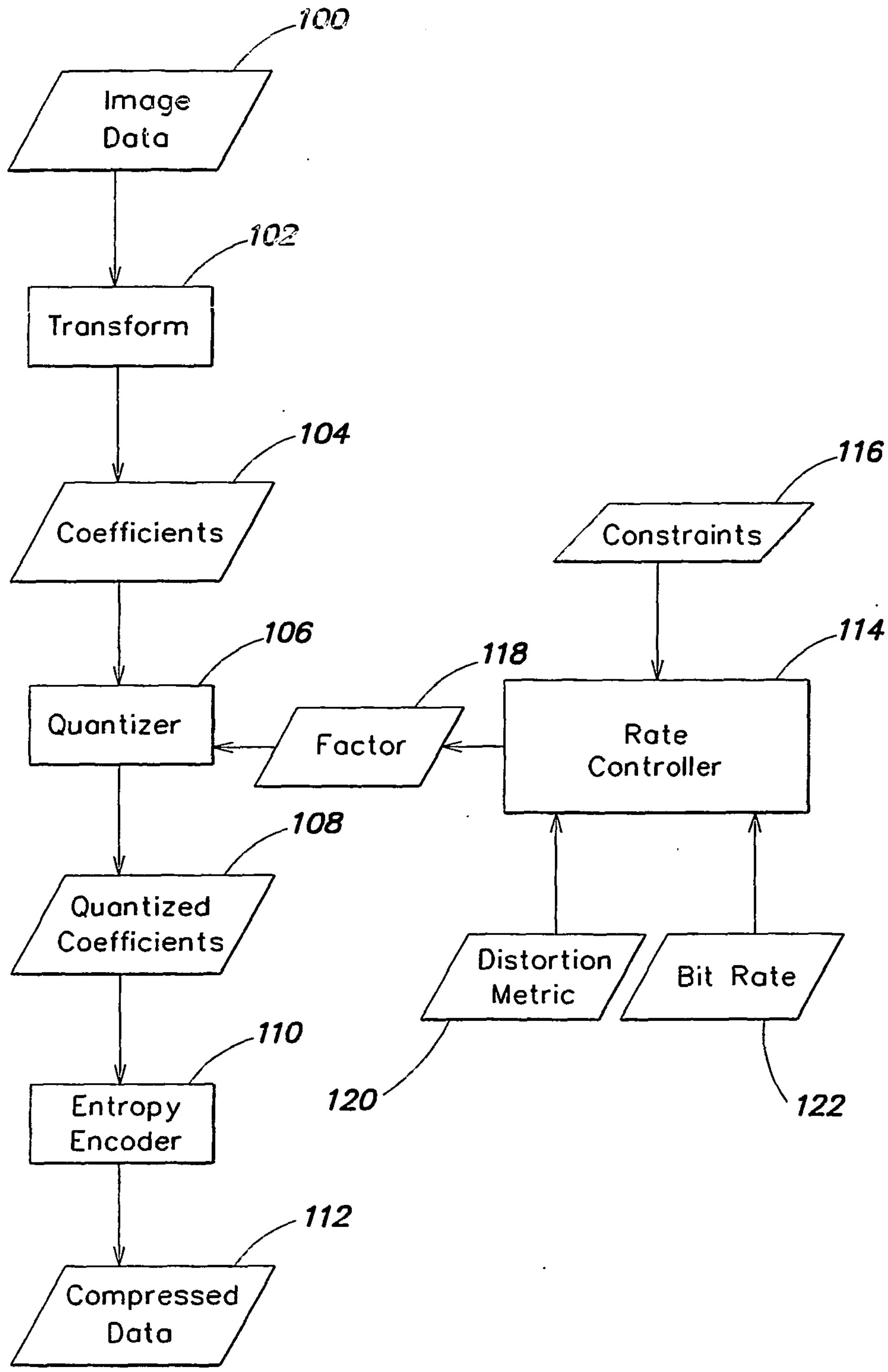
100
Image Data
102
Transform
104
Coefficients
106
Quantizer
118
Factor
116
Constraints
114
Rate Controller
108
Quantized Coefficients
Distortion Metric
Bit Rate
110
Entropy Encoder
120
122
112
Compressed Data

FIG. 1

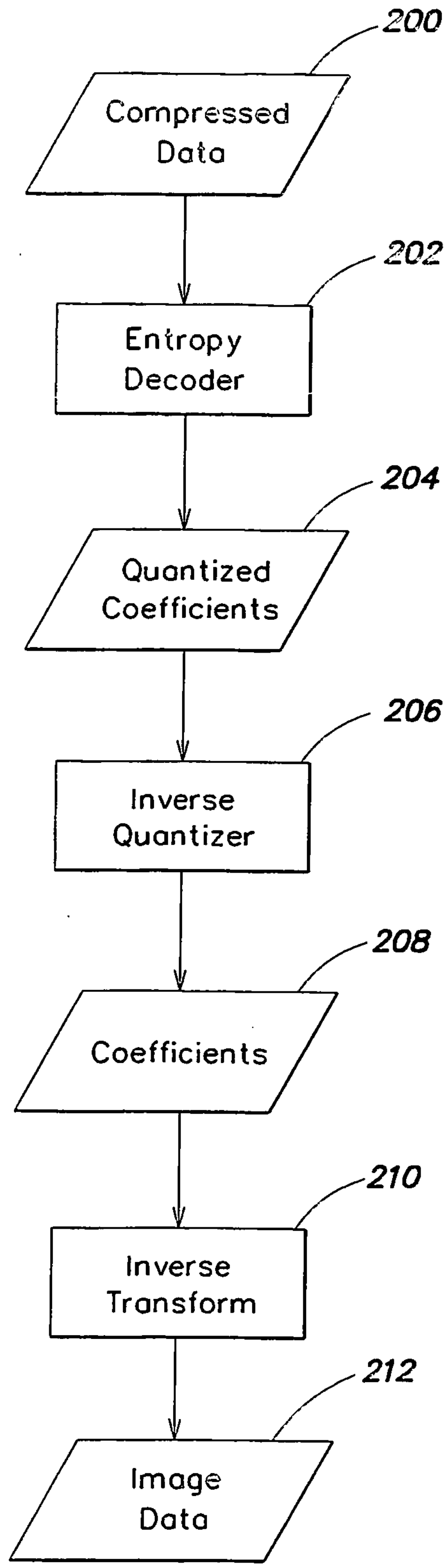
200
Compressed Data
202
Entropy Decoder
204
Quantized Coefficients
206
Inverse Quantizer
208
Coefficients
210
Inverse Transform
212
Image Data

FIG. 2

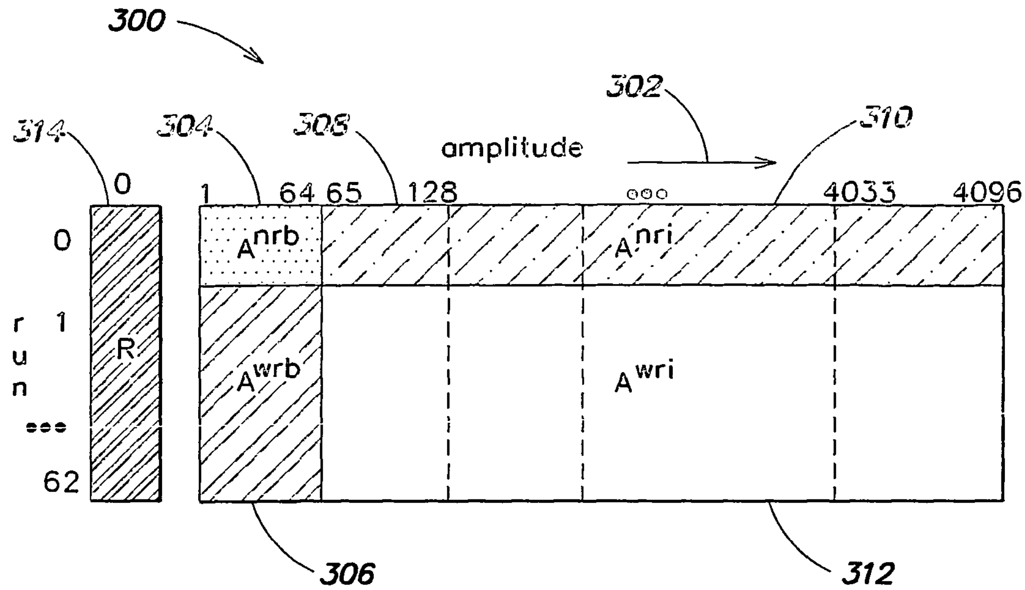
300
302
314
304
308
310
amplitude
0
1
64 65
128
4033
4096
0
r
u
n
1
62
R
$A^{nrb}$
$A^{nri}$
$A^{wrb}$
$A^{wri}$
306
312

FIG. 3

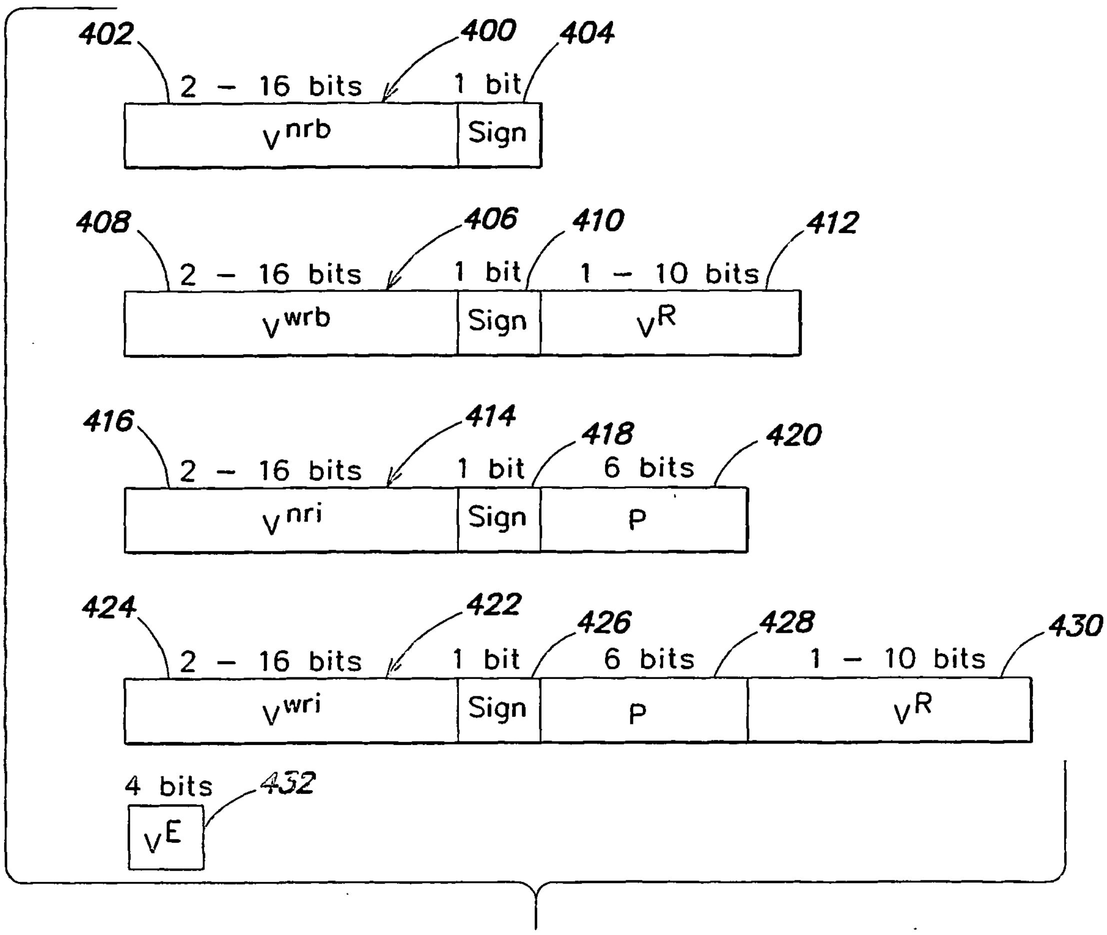
402
400
404
2 – 16 bits
1 bit
$V^{nrb}$
Sign
408
406
410
412
2 – 16 bits
1 bit
1 – 10 bits
$V^{wrb}$
Sign
$V^{R}$
416
414
418
420
2 – 16 bits
1 bit
6 bits
$V^{nri}$
Sign
P
424
422
426
428
430
2 – 16 bits
1 bit
6 bits
1 – 10 bits
$V^{wri}$
Sign
P
$V^{R}$
4 bits
432
$V^{E}$

FIG. 4

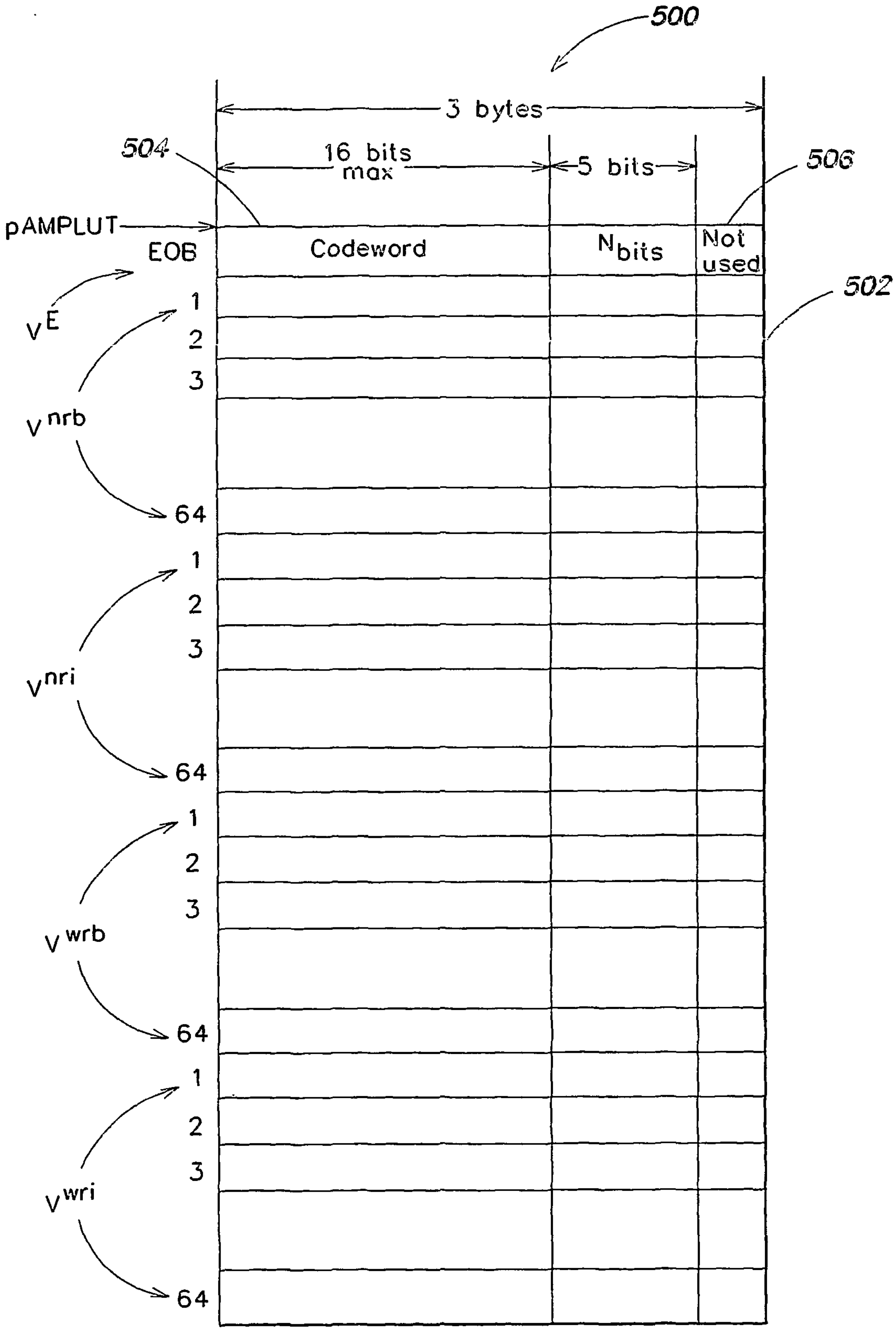
500
3 bytes
504
16 bits max
5 bits
506
pAMPLUT
EOB
Codeword
Nbits
Not used
502
VE
1
2
3
Vnrb
64
1
2
3
Vnri
64
1
2
3
Vwrb
64
1
2
3
Vwri
64

FIG. 5

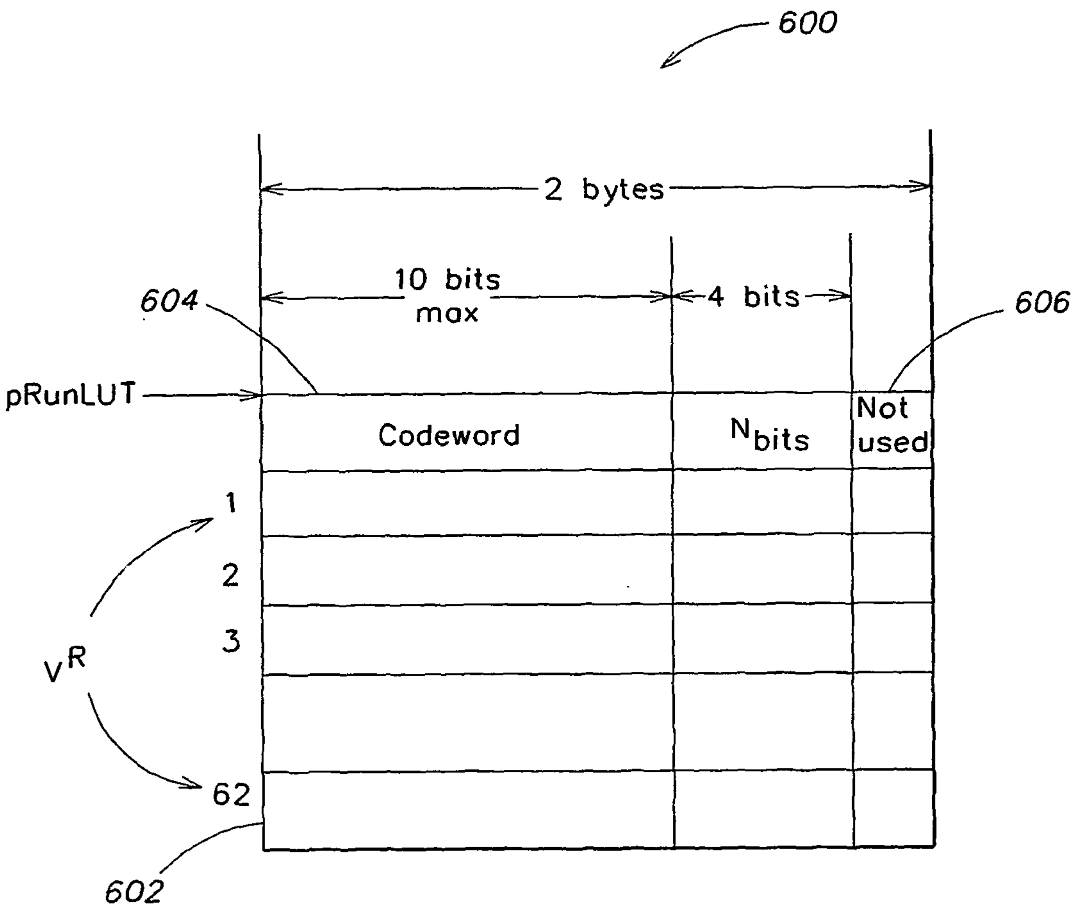
600
2 bytes
10 bits
max
4 bits
604
606
pRunLUT
Codeword
Nbits
Not
used
1
2
3
VR
62
602

FIG. 6

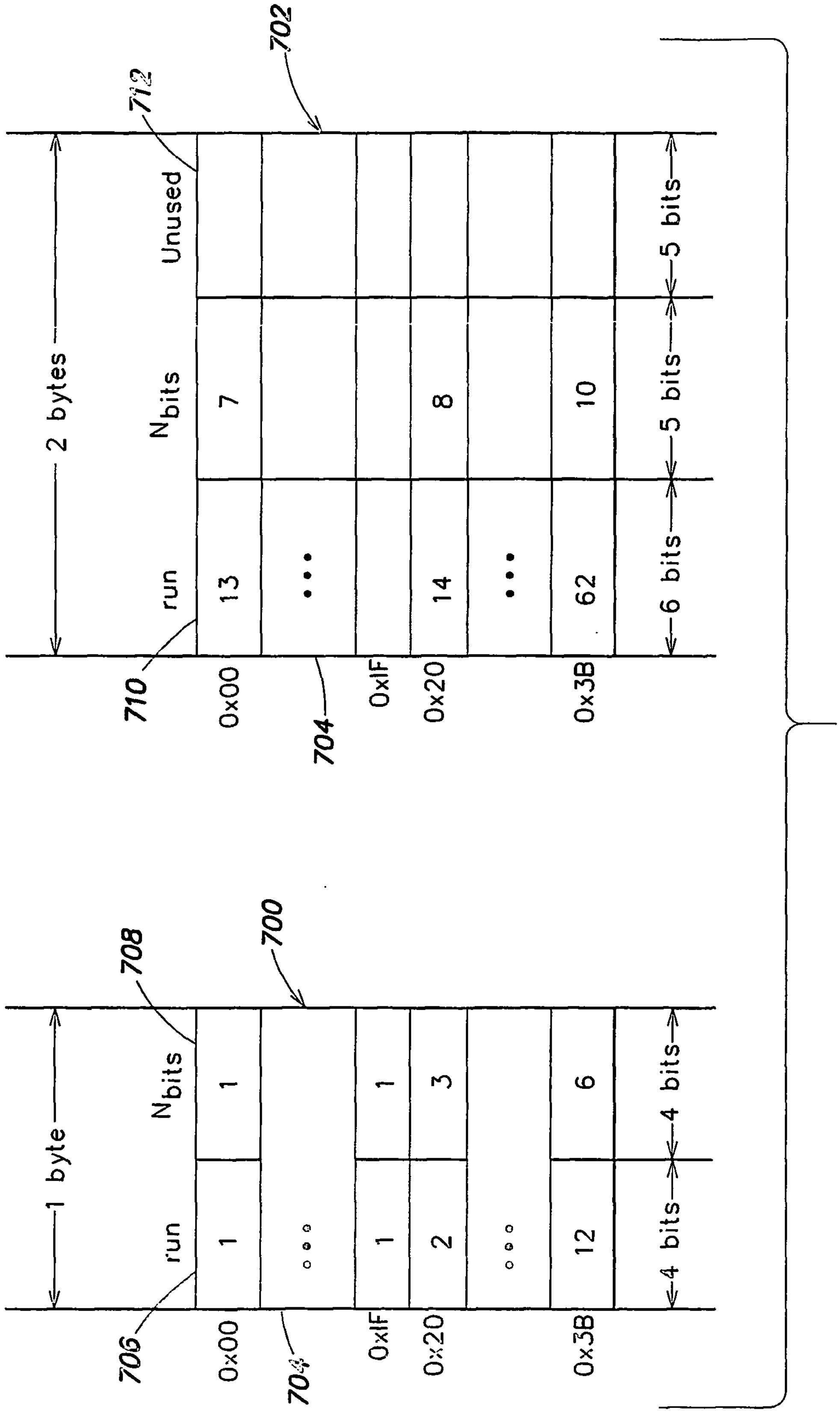
702
712
2 bytes
run
$N_{bits}$
Unused
710
704
0x00
13
7
0xIF
0x20
14
8
0x3B
62
10
6 bits
5 bits
5 bits
700
708
1 byte
run
$N_{bits}$
706
704
0x00
1
1
0xIF
1
1
0x20
2
3
0x3B
12
6
4 bits
4 bits

FIG. 7

800 (804; 806, 808, 810, 812)

| | Nbits (806) | amp (808) | run flag (810) | index flag (812) | unused |
|---|---|---|---|---|---|
| 0x000 | 2 | 1 | 0 | 0 | |
| ••• | ••• | ••• | ••• | ••• | ••• |
| 0x07F | 2 | 1 | 0 | 0 | |
| 0x080 | 2 | 1 | 1 | 0 | |
| | ••• | ••• | ••• | ••• | ••• |
| 0x08F | 2 | 1 | 1 | 0 | |
| 0x100 | 3 | 2 | 0 | 0 | |
| ••• | ••• | ••• | ••• | ••• | ••• |
| 0x1EF | 9 | 15 | 0 | 0 | |
| | 4 bits | 4 bits | 1 bit | 1 bit | 6 bits |

2 bytes

•
•
•

802 (804; 814, 816, 818, 820)

| | Nbits (814) | amp (816) | run flag (818) | zero flag (820) | unused |
|---|---|---|---|---|---|
| 0x000 | 9 | 16 | 0 | 0 | |
| | ••• | ••• | ••• | ••• | ••• |
| 0x07F | 9 | 16 | 0 | 0 | |
| 0x080 | 9 | 17 | 0 | 0 | |
| ••• | ••• | ••• | ••• | ••• | ••• |
| 0x0FF | 9 | 17 | 0 | 0 | |
| 0x100 | 9 | 6 | 1 | 0 | |
| ••• | ••• | ••• | ••• | ••• | ••• |
| 0x7FF | 16 | 62 | 1 | 1 | |
| | 5 bits | 6 bits | 1 bit | 1 bit | 3 bits |

2 bytes

FIG. 8

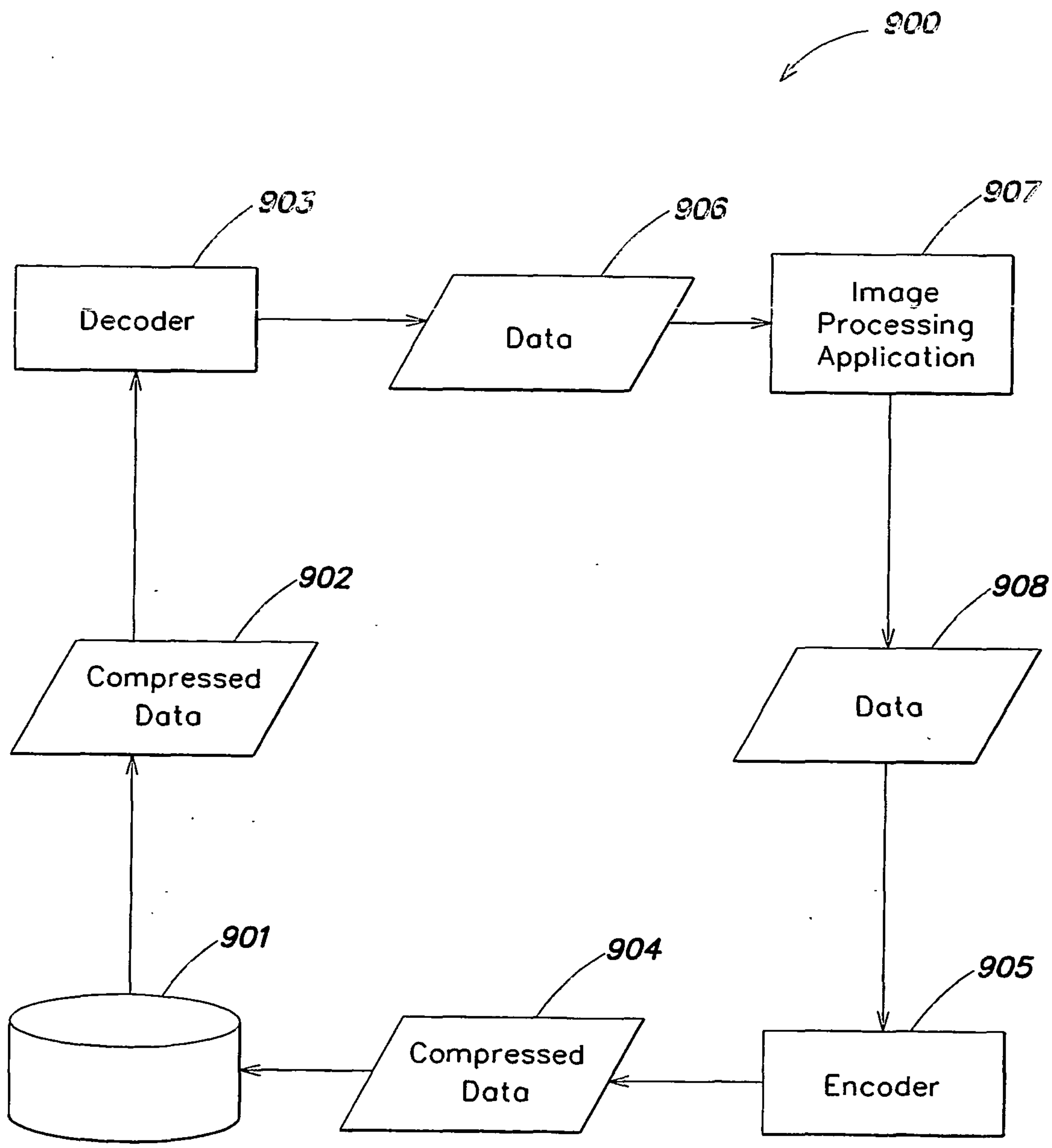
900
903
906
907
Decoder
Data
Image
Processing
Application
902
908
Compressed
Data
Data
901
904
905
Compressed
Data
Encoder

FIG. 9

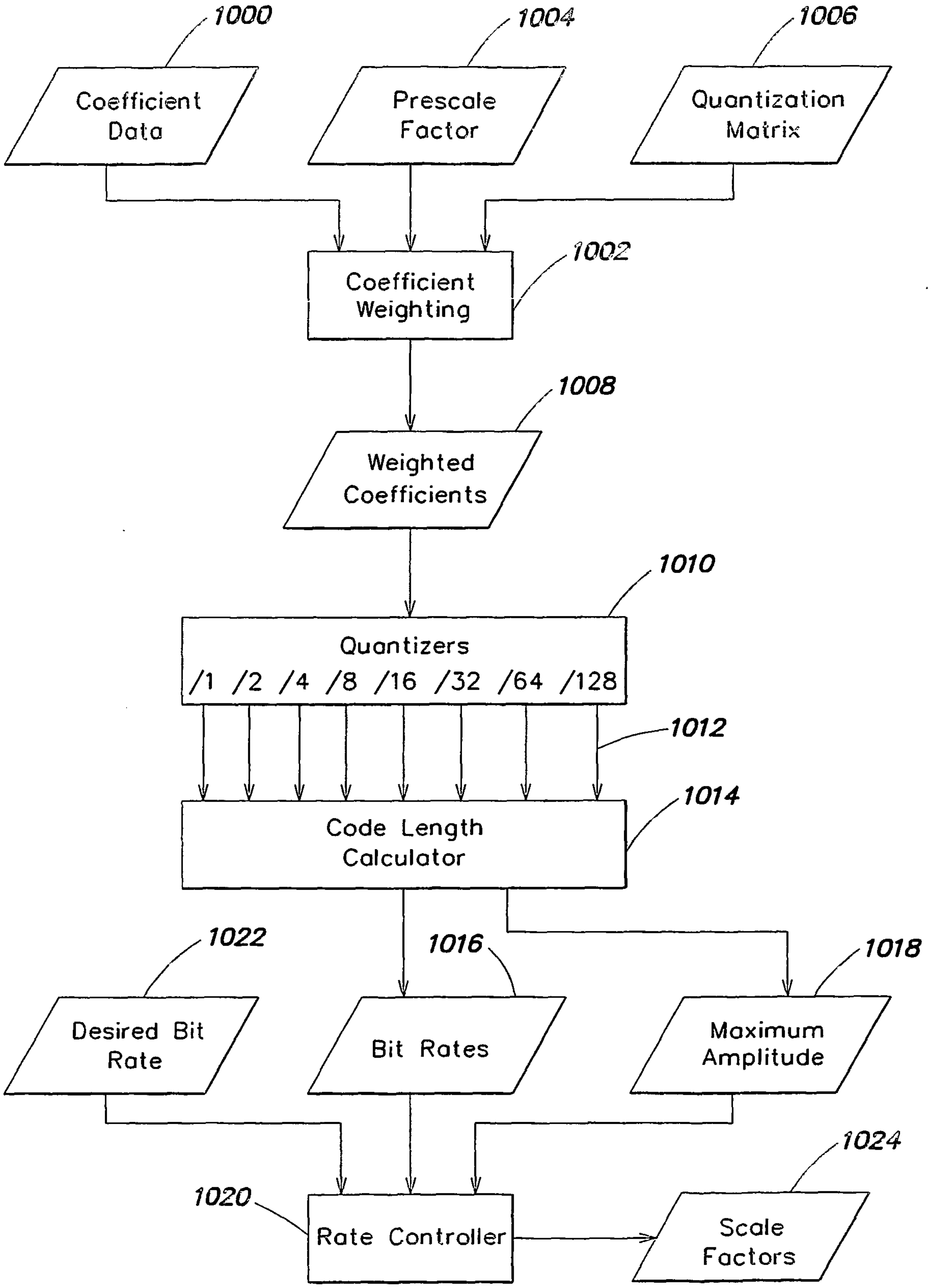
1000
Coefficient Data
1004
Prescale Factor
1006
Quantization Matrix
1002
Coefficient Weighting
1008
Weighted Coefficients
1010
Quantizers
/1 /2 /4 /8 /16 /32 /64 /128
1012
1014
Code Length Calculator
1022
Desired Bit Rate
1016
Bit Rates
1018
Maximum Amplitude
1020
Rate Controller
1024
Scale Factors

FIG. 10

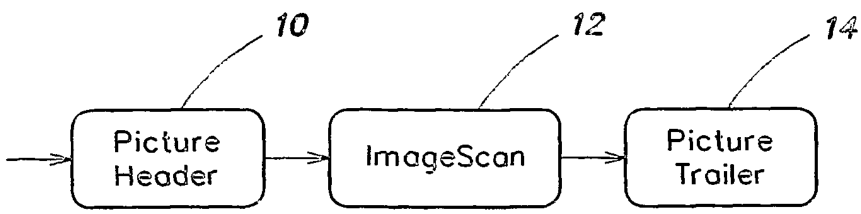


FIG. 11

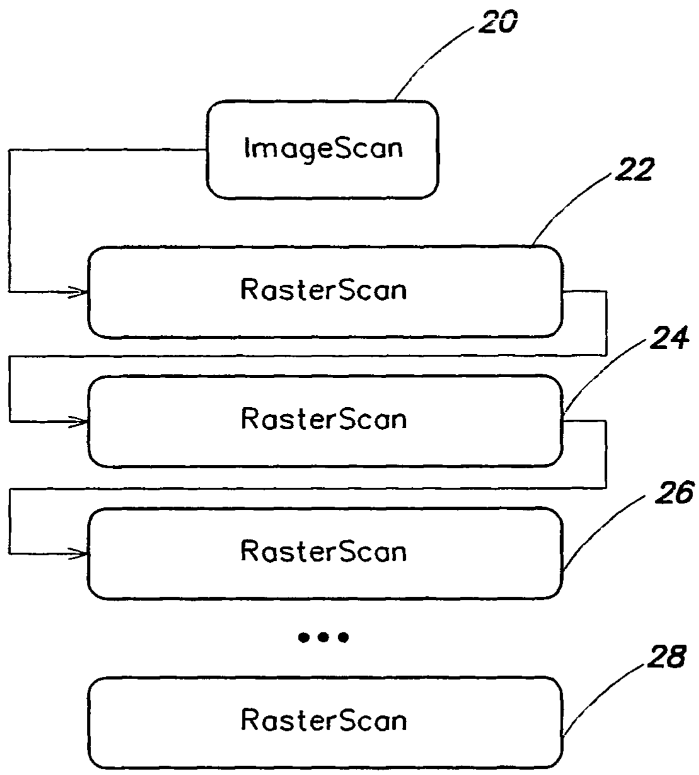


FIG. 12

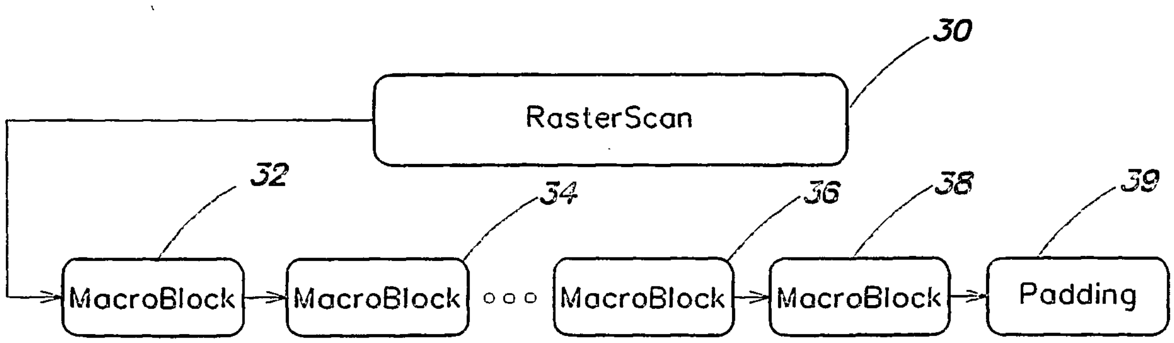


FIG. 13

40

| | |
|---|---|
| picture_header(){ | No. of bits |
| size_of_picture_header | 32 |
| size_of_picture_data | 32 |
| size_of_picture_trailer | 16 |
| picture_header_type | 8 |
| • • • | |
| if (picture_header_type == 'I frame image ID'){ | |
| I_frame_image_descriptor() | |
| } | |
| } | |

42

44

46

FIG. 14

50

| I_frame_image_descriptor(){ | No. of bits |
|---|---|
| ... | ... |
| if (next_bits()==imagescan_index_start_code){ | 32 |
| size_of_imagescan_index | 32 |
| imagescan_index(); | |
| } | |
| } | |

52 54 56 58

FIG. 15

60

| imagescan_index(){ | No. of bits |
|---|---|
| number_of_entries | 16 |
| lines_per_raster | 16 |
| for (I=0;I < number_of_entries ;I++){ | |
| macroblock_raster_byte_offset | 32 |
| } | |
| } | |

62 64 66

FIG. 16

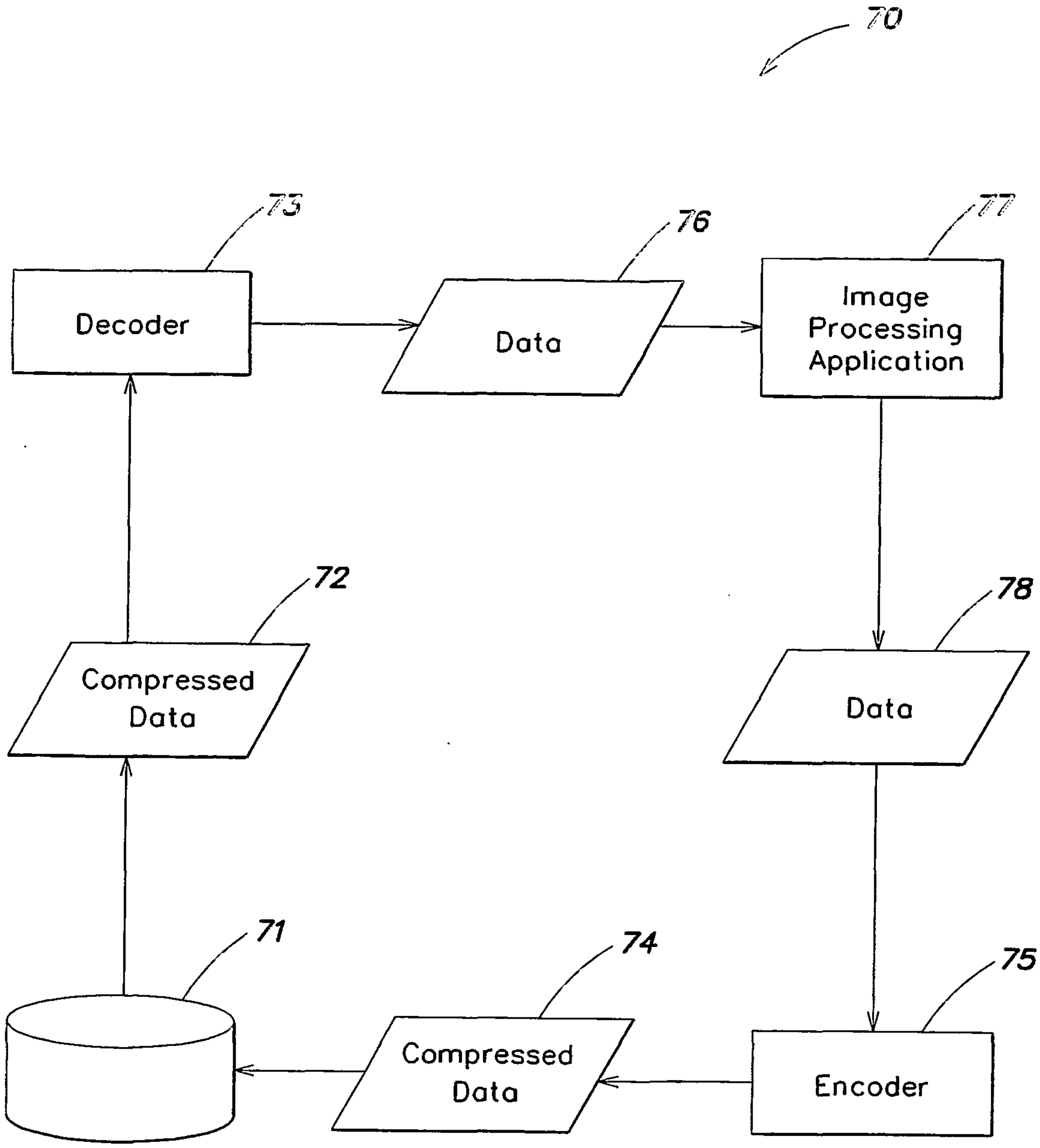
70
73
Decoder
76
Data
77
Image Processing Application
72
Compressed Data
78
Data
71
74
Compressed Data
75
Encoder

FIG. 17

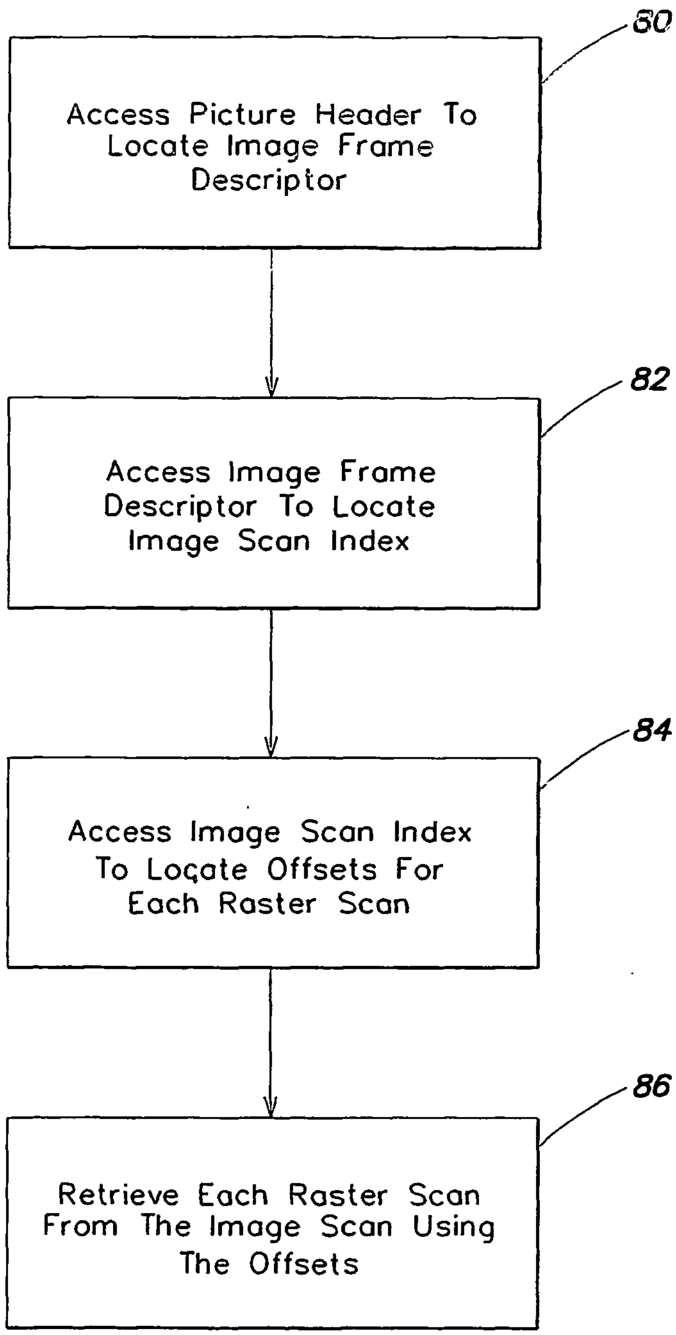
80
Access Picture Header To Locate Image Frame Descriptor
82
Access Image Frame Descriptor To Locate Image Scan Index
84
Access Image Scan Index To Locate Offsets For Each Raster Scan
86
Retrieve Each Raster Scan From The Image Scan Using The Offsets

FIG. 18

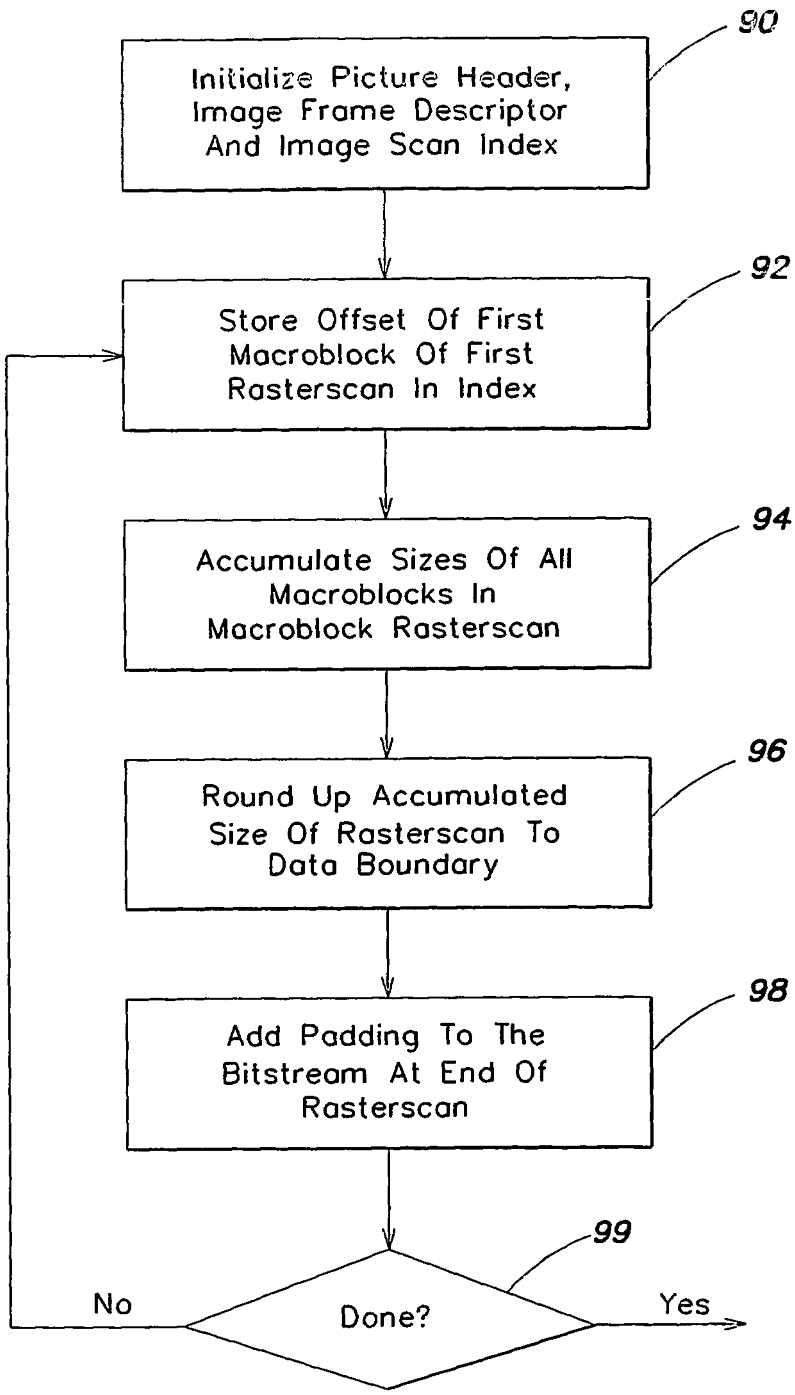
90
Initialize Picture Header, Image Frame Descriptor And Image Scan Index
92
Store Offset Of First Macroblock Of First Rasterscan In Index
94
Accumulate Sizes Of All Macroblocks In Macroblock Rasterscan
96
Round Up Accumulated Size Of Rasterscan To Data Boundary
98
Add Padding To The Bitstream At End Of Rasterscan
99
Done?
No
Yes

FIG. 19

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9835500 A
- EP 0500077 A
- US 5724097 A


### Non-patent literature cited in the description


- **VIRESH RATNAKAR ; MIRON LIVNY.** RD-OPT: An Efficient Algorithm for Optimizing DCT Quantization Tables. *Data Compression Conference,* 1995, 332-341
- **T. WIEGAND ; M. LIGHTSTONE ; D. MUKHERJEE ; T.G. CAMPBELL ; S.K. MITRA.** Rate-distortion optimized mode selection for very low bit rate video coding and the emerging H.263 standard. *IEEE Trans. Circuits Syst. Video Tech.,* vol. 6 (2), 182-190
- **ANTONIO ORTEGA.** Optimal bit allocation under multiple rate constraints. *Proc. of the Data Compression Conference,* April 1996
- **L-J. LIN ; A. ORTEGA.** Bit-rate control using piecewise approximated rate-distortion characteristics. *IEEE Trans. Circuits Syst. Video Tech,* August 1998, vol. 8 (4), 446-459
- **L-J. LIN ; A. ORTEGA ; C.-C. JAY KUO.** Cubic Spline Approximation of Rate and Distortion Functions for MPEG Video. *Proceedings of IST/SPIE, Digital Video Compression: Algorithms and Technologies,* 1996, vol. 2668, 169-180
- **LIANG-JIN LIN.** Video Bit-Rate Control with Spline Approximated Rate-Distortion Characteristics. *PhD Thesis,* 1997